# EUROPEAN PATENT APPLICATION

(11) **EP 4 491 640 A1**
(43) Date of publication of application: **15.01.2025**
(21) Application number: 23766613.6
(22) Date of filing: 27.02.2023
(51) Int. Cl.: C08F 4/654, C08F 10/06

(54) **CATALYST FOR OLEFIN POLYMERIZATION, METHOD FOR PRODUCING OLEFIN POLYMER, AND PROPYLENE HOMOPOLYMER**

(30) Priority: 11.03.2022 JP 2022038522
(71) Applicant: TOHO TITANIUM CO., LTD., Chigasaki-shi, Kanagawa 253-8510 (JP)
(72) Inventor: KAWAMOTO, Yuta, Chigasaki-shi, Kanagawa 253-8510 (JP); FUNABASHI, Hideo, Chigasaki-shi, Kanagawa 253-8510 (JP); KONO, Hiroyuki, Chigasaki-shi, Kanagawa 253-8510 (JP); SAKEMI, Takaharu, Chigasaki-shi, Kanagawa 253-8510 (JP); OGAWA, Hayashi, Chigasaki-shi, Kanagawa 253-8510 (JP); KUROSAKI, Keiichi, Chigasaki-shi, Kanagawa 253-8510 (JP)
(74) Representative: Müller-Boré & Partner Patentanwälte PartG mbB
(86) International application number: PCT/JP2023/006929
(87) International publication number: WO 2023/171435

(57) **Abstract**

Provided is a catalyst for polymerization of an olefin, capable of easily producing a propylene homopolymer with an excellent melt flow rate and moldability, as well as further excellent flexural modulus, despite containing a solid catalyst component for polymerization of an olefin comprising a compound other than phthalate esters as an internal electron-donating compound. A catalyst for polymerization of an olefin, comprising: a solid catalyst component for polymerization of an olefin, comprising magnesium, titanium, halogen, and a succinic acid diester compound, wherein a ratio (S/T), represented by a total content of an internal electron-donating compound with the succinic acid diester compound as a main component (S) to a content of the titanium (T), is 0.60 to 1.30 in a molar ratio, an organoaluminum compound, and one or more external electron-donating compounds selected from specific aminosilane compounds.

## Description

### [Technical Field]

The present invention relates to a catalyst for polymerization of an olefin, a method for producing a polymer of an olefin, and a propylene homopolymer.

### [Background Art]

In recent years, polymers of olefins such as polypropylene (PP) are utilized for various applications such as containers and films in addition to molded products such as automobile parts and household appliances.

A polypropylene resin composition is lightweight and highly moldable, excellent in chemical stability such as heat resistance and chemical resistance of molded articles, and extremely excels in cost-effectiveness. For this reason, such a resin composition is used in many fields as one of the most important plastic materials.

For further expanding applications, propylene capable of being used as a substitute for polystyrene and an ABS resin with a high melt flow rate (MFR), excellent moldability and excellent flexural modulus has been in demand.

For polymerizing olefins such as propylene, a polymerization method using a solid catalyst component comprising a magnesium atom, a titanium atom, a halogen atom, and an internal electron-donating compound as essential components is known, and many methods for polymerizing or copolymerizing olefins in the presence of a catalyst for polymerization of an olefin composed of the above solid catalyst components, an organoaluminum compound, and an organosilicon compound are proposed (see Patent Literature 1 or the like).

For example, Patent Literature 1 proposes a method for polymerizing propylene using a catalyst for polymerization of an olefin comprising a solid titanium catalyst component on which an internal electron-donating compound such as phthalate esters is supported, an organoaluminum compound as a cocatalyst component, and an organosilicon compound having at least one Si-O-C bond. Many literatures including Patent Literature 1 propose the method for obtaining a highly tactic polymer using a phthalate ester as an internal electron-donating compound under high polymerization activity.

### [Citation List]

### [Patent Literature]

[Patent Literature 1] Japanese Patent Laid-Open No. 57-63310
[Patent Literature 2] Japanese Patent Laid-Open No. 2000-017019

### [Summary of Invention]

### [Technical Problem]

However, di-n-butyl phthalate and butyl benzyl phthalate, a kind of the phthalate ester, are designated as Substance of Very High Concern (SVHC) under The Regulation on the Registration, Evaluation, Authorization and Restriction of Chemicals (REACH) in Europe. For this reason, a demand for converting to a SVHC substance free catalyst system has been increasing from the viewpoint of reducing environmental impact.

On the other hand, it is known that when a solid catalyst component for polymerization of an olefin comprising a compound other than phthalate esters is used as the internal electron-donating compound, properties of the obtained polymer are inferior when the polymer is subjected to polymerization of an olefin as compared with when a solid catalyst component for polymerization of an olefin comprising a phthalate ester as the internal electron-donating compound is used, and in particular, it becomes difficult to produce a polymer with excellent melt flow rate and formability and with excellent flexural modulus.

In order to improve the moldability, it is known that a polymer with a moderate melt flow rate (MFR) as well as a polymer with excellent linear viscoelasticity that exhibit a high complex viscosity at a low angular frequency and a low complex viscosity at a high angular frequency are preferable, and such a polymer, for example, is suitably a polymer with a wide molecular weight distribution.

As a method of obtaining polypropylene with good moldability by expanding the molecular weight distribution, for example, Patent Literature 2 proposes the method of multistage polymerization using multiple polymerization reactors, but the polymerization method described in Patent Literature 2 discloses, as an example, the use of a solid catalyst component for polymerization of an olefin comprising a phthalate ester as an internal electron-donating compound, and the polymer to be obtained has been required to exhibit further excellent flexural modulus (FM).

Thus, there has been no known catalyst for polymerization of an olefin capable of producing polypropylene (propylene homopolymer) with a melt flow rate (MFR), which is an indicator of moldability, of 300 g/10 min or less, which is practically appropriate moldability, a high complex viscoelastic ratio of 5.5 or more, and a high flexural modulus (FM) of 1900 MPa or more.

Under such circumstances, the present invention can provide a catalyst for polymerization of an olefin, capable of easily producing a propylene homopolymer with an excellent melt flow rate and moldability, as well as further excellent flexural modulus, despite containing a solid catalyst component for polymerization of an olefin comprising a compound other than phthalate esters as an internal electron-donating compound, and also aims to provide a method for producing a polymer of an olefin, and a propylene homopolymer.

### [Solution to Problem]

For achieving the above technical issue, the present inventors conducted extensive studies and consequently found that the above technical issues can be achieved by the catalyst for polymerization of an olefin comprising a solid catalyst component for polymerization of an olefin comprising one or more magnesium, titanium, halogen, and a succinic acid diester compound, wherein a ratio (S/T), represented by a total content of an internal electron-donating compound with the succinic acid diester compound as a main component (S) to a content of the titanium (T), is 0.60 to 1.30 in a molar ratio, an organoaluminum compound, and one or more external electron-donating compounds selected from specific aminosilane compounds, based on which the present invention has come to accomplishment.

More specifically, the present invention provides:
(1) a catalyst for polymerization of an olefin, comprising:
   a solid catalyst component for polymerization of an olefin, comprising magnesium, titanium, halogen, and a succinic acid diester compound, wherein a ratio (S/T), represented by a total content of an internal electron-donating compound with the succinic acid diester compound as a main component (S) to a content of the titanium (T), is 0.60 to 1.30 in a molar ratio,
   an organoaluminum compound, and
   one or more external electron-donating compounds selected from aminosilane compounds represented by the following formula (I):

      R¹ₙSi(NR²R³)₄₋ₙ (I)
   wherein R¹ is an alkyl group having 1 to 20 carbon atoms, a vinyl group, an alkenyl group having 3 to 12 carbon atoms, an alkoxy group having 1 to 20 carbon atoms, an vinyloxy group, an alkenyloxy group having 3 to 20 carbon atoms, a cycloalkyl group having 3 to 20 carbon atoms, a cycloalkyloxy group having 3 to 20 carbon atoms, or an aryl group having 6 to 20 carbon atoms or an aryloxy group having 6 to 20 carbon atoms, wherein when more than one R¹ are present, the more than one R¹ may be the same as or different from each other; R² and R³ are a hydrogen atom, an alkyl group having 1 to 20 carbon atoms, a vinyl group, an alkenyl group having 3 to 20 carbon atoms, a cycloalkyl group having 3 to 20 carbon atoms, a cycloalkenyl group having 3 to 20 carbon atoms, or an aryl group having 6 to 20 carbon atoms, wherein R² and R³ may be the same as or different from each other and may be bonded to each other to form a ring, and when more than one NR²R³ groups are present, the more than one NR²R³ groups may be the same as or different from each other; and n satisfies 1 ≤ n ≤ 3,
(2) the catalyst for polymerization of an olefin according to the above (1), wherein the total content of the internal electron-donating compound with the succinic acid diester compound as the main component (S) in the solid catalyst component for polymerization of an olefin is 10.0% by mass or more,
(3) the catalyst for polymerization of an olefin according to the above (1) or (2), wherein the content of the titanium (T) in the solid catalyst component for polymerization of an olefin is 1.0 to 6.0% by mass,
(4) the catalyst for polymerization of an olefin according to any one of the above (1) to (3), wherein the succinic acid diester compound is one or more compounds selected from compounds represented by the following formula (II): 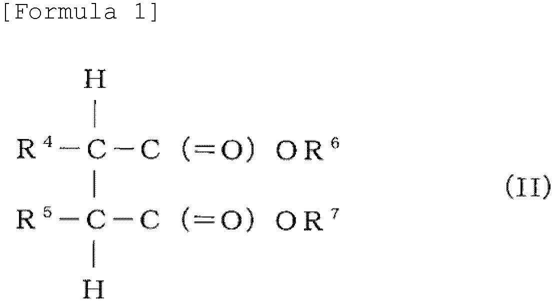 wherein R⁴ and R⁵, the same as or different from each other, are a hydrogen atom or an alkyl group having 1 to 4 carbon atoms, and R⁶ and R⁷, the same as or different from each other, are a straight chain alkyl group or a branched chain alkyl group having 2 to 4 carbon atoms,
(5) the catalyst for polymerization of an olefin according to any one of the above (1) to (4), wherein the organoaluminum compound is one or more compounds selected from compounds represented by the following formula (III) :

   R⁸ₚAlQ₃₋ₚ (III)

   wherein R⁸ is an alkyl group having 1 to 6 carbon atoms, Q is a hydrogen atom or halogen, and p satisfies 0 < p ≤ 3, wherein when more than one R⁸ are present, each R⁸ may be the same as or different from each other, and when more than one Q are present, each Q may be the same as or different from each other,
(6) a method for producing a polymer of an olefin, comprising polymerizing an olefin using the catalyst for polymerization of an olefin according to any one of the above (1) to (5), and
(7) a propylene homopolymer having:
   (a) a melt flow rate of 300 g/10 min or less,
   (b) a flexural modulus of 1,900 MPa or more, and
   (c) a ratio of a complex viscosity η* at an angular frequency of 0.01 rad/sec to a complex viscosity η* at an angular frequency of 100 rad/sec is 5.5 or more.

### [Advantageous Effects of Invention]

The present invention can accordingly provide a catalyst for polymerization of an olefin, capable of easily producing a propylene homopolymer with an excellent melt flow rate and moldability, as well as further excellent flexural modulus, despite containing a solid catalyst component for polymerization of an olefin comprising a compound other than phthalate esters as an internal electron-donating compound, and the method for producing a polymer of an olefin, and the propylene homopolymer.

### [Description of Embodiments]

First, the catalyst for polymerization of an olefin according to the present invention will be described.

The catalyst for polymerization of an olefin according to the present invention comprises: magnesium, titanium, halogen, and a succinic acid diester compound,
wherein a ratio (S/T), represented by a total content of an internal electron-donating compound with the succinic acid diester compound as a main component (S) to a content of the titanium (T), is 0.60 to 1.30 in a molar ratio,
an organoaluminum compound, and
one or more external electron-donating compounds selected from aminosilane compounds represented by the following formula (I):

   R¹ₙSi(NR²R³)₄₋ₙ (I)
wherein R¹ is an alkyl group having 1 to 20 carbon atoms, a vinyl group, an alkenyl group having 3 to 12 carbon atoms, an alkoxy group having 1 to 20 carbon atoms, an vinyloxy group, an alkenyloxy group having 3 to 20 carbon atoms, a cycloalkyl group having 3 to 20 carbon atoms, a cycloalkyloxy group having 3 to 20 carbon atoms, or an aryl group having 6 to 20 carbon atoms or an aryloxy group having 6 to 20 carbon atoms, wherein when more than one R¹ are present, the more than one R¹ may be the same as or different from each other; R² and R³ are a hydrogen atom, an alkyl group having 1 to 20 carbon atoms, a vinyl group, an alkenyl group having 3 to 20 carbon atoms, a cycloalkyl group having 3 to 20 carbon atoms, a cycloalkenyl group having 3 to 20 carbon atoms, or an aryl group having 6 to 20 carbon atoms, wherein R² and R³ may be the same as or different from each other and may be bonded to each other to form a ring, and when more than one NR²R³ groups are present, the more than one NR²R³ groups may be the same as or different from each other; and n satisfies 1 ≤ n ≤ 3.

Examples of the solid catalyst component for polymerization of an olefin composing the catalyst for polymerization of an olefin according to the present invention include a contact reactant obtained through a reaction in which a raw material component to be a source of magnesium, titanium, and halogen supply, and the succinic acid diester compound which is an internal electron-donating compound are allowed to mutually contact in an organic solvent. Specific examples include a contact reactant obtained by using a magnesium compound and a tetravalent titanium halogen compound as the raw material component to be a source of magnesium, titanium, and halogen supply, and allowing these raw materials to mutually contact the internal electron-donating compound comprising the succinic acid diester compound.

Examples of the above magnesium compound include one or more compounds selected from dialkoxy magnesium, magnesium dihalide, and alkoxy magnesium halide.

Of the above magnesium compounds, dialkoxy magnesium or magnesium dihalide is preferable. Specific examples include dimethoxy magnesium, diethoxy magnesium, dipropoxy magnesium, dibutoxy magnesium, ethoxymethoxy magnesium, ethoxypropoxy magnesium, butoxyethoxy magnesium, magnesium dichloride, magnesium dibromide, and magnesium diiodide, with diethoxy magnesium and magnesium dichloride being particularly preferable.

Of the above magnesium compounds, the dialkoxy magnesium may be those obtained by reacting metal magnesium with alcohol in the presence of halogen or a halogen-containing metal compound.

The above dialkoxy magnesium is preferably granular or powder, and the usable shape thereof can be irregular or spherical.

When spherical dialkoxy magnesium is used, a polymer powder having even better particle shape (more spherical) and a narrower particle size distribution is obtained, whereby handling operability of the polymer powder formed during polymerization process is enhanced, and the occurrence of blockage and the like caused by the fine powder contained in the formed polymer powder can be inhibited.

The above spherical dialkoxy magnesium does not need to be true spherical, and oval shape or a potato shape dialkoxy magnesium can also be used.

The mean particle diameter (mean particle diameter D50) of the above dialkoxy magnesium is preferably 1.0 to 200.0 µm, and more preferably 5.0 to 150.0 µm. The mean particle diameter D50 herein means the particle size at 50% of accumulated particle sizes in the volume accumulated particle size distribution when measured using a laser diffraction scattering particle size analyzer.

When dialkoxy magnesium is spherical, the above mean particle diameter D50 is preferably 1.0 to 100.0 µm, more preferably 5.0 to 80.0 µm, and further preferably 10.0 to 70.0 µm.

Additionally, the particle size distribution of dialkoxy magnesium is preferably narrow particle size distribution with a small amount of fine powder and coarse powder.

Specifically, dialkoxy magnesium has, when measured using a laser diffraction scattering particle size analyzer, particles having a particle size of 5.0 µm or less of preferably 20% or less, and more preferably 10% or less. On the other hand, dialkoxy magnesium has, when measured using a laser diffraction scattering particle size analyzer, particles having a particle size of 100.0 µm or more of preferably 20% or less, and more preferably 10% or less.

Further, the particle size distribution, when represented by l n (D90/D10), is preferably 3 or less, and more preferably 2 or less. D90 herein means the particle size at 90% of accumulated particle sizes in the volume accumulated particle size distribution when measured using a laser diffraction scattering particle size analyzer. D10 herein means the particle size at 10% of accumulated particle sizes in the volume accumulated particle size distribution when measured using a laser diffraction scattering particle size analyzer.

The method for producing the above spherical dialkoxy magnesium are described in, for example, Japanese Patent Laid-Open No. 62-51633, Japanese Patent Laid-Open No. 3-74341, Japanese Patent Laid-Open No. 4-368391, Japanese Patent Laid-Open No. 8-73388 and the like.

In the solid catalyst component for polymerization of an olefin according to the present invention, a magnesium compound has a specific surface area of preferably 5 m²/g or more, more preferably 5 to 50 m²/g, and further preferably 10 to 40 m²/g.

When a magnesium compound having a specific surface area within the above range is used, a solid catalyst component for polymerization of an olefin having a desired specific surface area can be easily prepared.

In the present application document, the specific surface area of magnesium compound means the value measured by the BET method, and specifically the specific surface area of magnesium compound means the value obtained by vacuum drying a measurement specimen in advance at 50°C for 2 hours and measuring by the BET method (automatic measurement) using Automatic Surface Area Analyzer HM model-1230 manufactured by Mountech, in the presence of a mixed gas of nitrogen and helium.

The above magnesium compound is preferably in the form of a solution or a suspension when reacted, and the form of a solution or a suspension can allow the reaction to preferably proceed.

When the above magnesium compound is solid, the solid magnesium compound is dissolved in a solvent capable of solubilizing the magnesium compound to prepare a magnesium compound in the form of a solution, or suspended in a solvent incapable of solubilizing the magnesium compound to prepare a magnesium compound in the form of a suspension.

When the above magnesium compound is liquid, a magnesium compound in the form of a solution may directly be used, or may further be dissolved in a solvent capable of solubilizing the magnesium compound and used as a magnesium compound in the form of a solution.

Examples of the compound capable of solubilizing solid magnesium compound include at least one compound selected from the group consisting of alcohol, ether, and ester, with alcohols such as ethanol, propanol, butanol, and 2-ethylhexanol being preferable, and 2-ethylhexanol being particularly preferable.

On the other hand, examples of the medium incapable of solubilizing solid magnesium compound include one or more solvents selected from saturated hydrocarbon solvents and unsaturated hydrocarbon solvents which do not dissolve a magnesium compound.

In the solid catalyst component for polymerization of an olefin composing the catalyst for polymerization of an olefin according to the present invention, the tetravalent titanium halogen compound as the raw material component to be a source of titanium and halogen supply is not particularly limited, but preferably one or more compounds selected from the group consisting of titanium halide and alkoxy titanium halide represented by the following formula (IV):

Ti(OR⁹)ᵣX₄₋ᵣ (IV)

wherein R⁹ is an alkyl group having 1 to 4 carbon atoms, X is a halogen atom such as a chlorine atom, a bromine atom, and an iodine atom, and r satisfies 0 ≤ r ≤ 3.

In the above formula (IV), r satisfies 0 ≤ r ≤ 3, and specifically, r is 0, 1, 2, or 3.

Examples of the titanium halide represented by the above formula (IV) include one or more titanium tetrahalides selected from titanium tetrachloride, titanium tetrabromide, titanium tetraiodide and the like.

Examples of the alkoxy titanium halide represented by the above formula (IV) include one or more alkoxy titanium halides selected from methoxytitanium trichloride, ethoxytitanium trichloride, propoxytitanium trichloride, n-butoxytitanium trichloride, dimethoxytitanium dichloride, diethoxytitanium dichloride, dipropoxytitanium dichloride, di-n-butoxytitanium dichloride, trimethoxytitanium chloride, triethoxytitanium chloride, tripropoxytitanium chloride, tri-n-butoxytitanium chloride and the like.

The tetravalent titanium halogen compound is preferably titanium tetrahalide, and more preferably titanium tetrachloride.

These titanium compounds may be used singly, or 2 or more compounds can also be used in combination.

In the solid catalyst component for polymerization of an olefin composing the catalyst for polymerization of an olefin according to the present invention, examples of the succinic acid diester compound include one or more compounds selected from the compounds represented by the following formula (II): 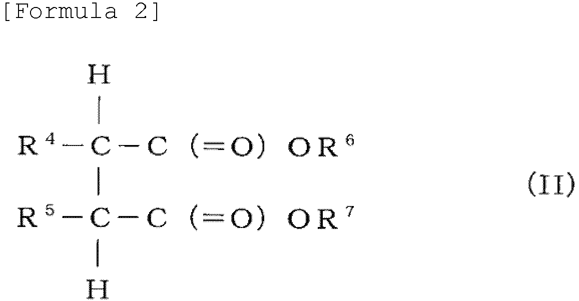 wherein, R⁴ and R⁵, the same as or different from each other, are a hydrogen atom or an alkyl group having 1 to 4 carbon atoms, and R⁶ and R⁷, the same as or different from each other, are a straight chain alkyl group or a branched chain alkyl group having 2 to 4 carbon atoms.

In the compound represented by the formula (II), R⁴ and R⁵, the same as or different from each other, are a hydrogen atom or an alkyl group having 1 to 4 carbon atoms.

When R⁴ or R⁵ is an alkyl group having 1 to 4 carbon atoms, examples specifically include a methyl group, an ethyl group, a n-propyl group, an isopropyl group, a n-butyl group, and an isobutyl group.

In the compound represented by the above formula (II), R⁶ and R⁷, the same as or different from each other, are a straight chain alkyl group or a branched chain alkyl group having 2 to 4 carbon atoms.

When R⁶ and R⁷ are a straight chain alkyl group or a branched chain alkyl group having 2 to 4 carbon atoms, examples specifically include an ethyl group, a n-propyl group, an isopropyl group, a n-butyl group, and an isobutyl group.

In the solid catalyst component for polymerization of an olefin composing the catalyst for polymerization of an olefin according to the present invention, the succinic acid diester compound is not particularly limited as long as the compound is the dialkyl ester succinate represented by the formula (II), and examples include one or more compounds selected from diethyl succinate, diethyl 2,3-dimethylsuccinate, diethyl 2,3-diethylsuccinate, diethyl 2,3-di-n-propylsuccinate, diethyl 2,3-diisopropylsuccinate, diethyl 2,3-di-n-butylsuccinate, and diethyl 2,3-diisobutylsuccinate; di-n-propyl succinate, di-n-propyl 2,3-dimethylsuccinate, di-n-propyl 2,3-diethylsuccinate, di-n-propyl 2,3-di-n-propylsuccinate, di-n-propyl 2,3-diisopropylsuccinate, di-n-propyl 2,3-di-n-butylsuccinate, and di-n-propyl 2,3-diisobutylsuccinate;
diisopropyl succinate, diisopropyl 2,3-dimethylsuccinate, diisopropyl 2,3-diethylsuccinate, diisopropyl 2,3-di-n-propylsuccinate, diisopropyl 2,3-diisopropylsuccinate, diisopropyl 2,3-di-n-butylsuccinate, and diisopropyl 2,3-diisobutylsuccinate;
di-n-butyl succinate, di-n-butyl 2,3-dimethylsuccinate, di-n-butyl 2,3-diethylsuccinate, di-n-butyl 2,3-di-n-propylsuccinate, di-n-butyl 2,3-diisopropylsuccinate, din-butyl 2,3-di-n-butylsuccinate, and di-n-butyl 2,3-diisobutylsuccinate; and
diisobutyl succinate, diisobutyl 2,3-dimethylsuccinate, diisobutyl 2,3-diethylsuccinate, diisobutyl 2,3-di-n-propylsuccinate, diisobutyl 2,3-diisopropylsuccinate, diisobutyl 2,3-di-n-butylsuccinate, and diisobutyl 2,3-diisobutylsuccinate.

Of these dialkyl ester succinates, preferably used are diethyl succinate, di-n-propyl succinate, di-n-butyl succinate, diisobutyl succinate, diethyl 2,3-di-n-propylsuccinate, diethyl 2,3-diisopropylsuccinate, di-n-propyl 2,3-di-n-propylsuccinate, di-n-propyl 2,3-diisopropyl succinate, diisopropyl 2,3-di-n-propylsuccinate, diisopropyl 2,3-diisopropylsuccinate, di-n-butyl 2,3-di-n-propylsuccinate, di-n-butyl 2,3-diisopropylsuccinate, diisobutyl 2,3-di-n-propylsuccinate, and diisobutyl 2,3-diisopropylsuccinate.

The solid catalyst component for polymerization of an olefin composing the catalyst for polymerization of an olefin according to the present invention comprises, as the essential component, a succinic acid diester compound as the internal electron-donating compound, but may further comprise other internal electron-donating compounds (hereinafter, referred appropriately to as "other internal electron-donating compounds") than these internal electron-donating compounds.

Examples of such other internal electron-donating compounds include one or more compounds selected from carbonates, acid halides, acid amides, nitriles, acid anhydrides, diether compounds, and carboxylic acid esters.

Examples of such other internal electron-donating compound specifically include one or more compounds selected from ether carbonate compounds, diester carboxylates such as diester cycloalkane dicarboxylate, diester cycloalkene dicarboxylate, diester malonate, alkyl-substituted diester malonate, and diester maleate, and diether compounds.

More specifically, such other internal electron-donating compound is more preferably one or more compounds selected from ether carbonate compounds such as (2-ethoxyethyl)methyl carbonate, (2-ethoxyethyl)ethyl carbonate, and (2-ethoxyethyl)phenyl carbonate, diester dialkyl malonate such as dimethyl diisobutyl malonate, and diethyl diisobutyl malonate, diester cycloalkane dicarboxylate such as dimethyl cyclohexane-1,2-dicarboxylate, and 1,3-diethers such as (isopropyl)(isopentyl)-1,3-dimethoxy propane, and 9,9-bis)methoxymethyl)fluorene.

On the other hand, the solid catalyst component for polymerization of an olefin composing the catalyst for polymerization of an olefin according to the present invention has a content of phthalate esters of suitably 0.2% by mass or less (0.0 to 0.2% by mass), more suitably 0.1% by mass or less (0.0 to 0.1% by mass), and further suitably 0.0% by mass (substantially free of phthalate esters (limit of detection or less)).

The solid catalyst component for polymerization of an olefin composing the catalyst for polymerization of an olefin according to the present invention has, together with the succinic acid diester compound, other internal electron-donating compounds, whereby physical properties such as the hydrogen responsiveness during polymerization, the tacticity and molecular weight distribution of a polymer of an olefin to be obtained during polymerization can be easily controlled in the range equivalent to the polymer produced using the conventional solid catalyst comprising phthalate esters as the internal electron-donating compound.

The solid catalyst component for polymerization of an olefin composing the catalyst for polymerization of an olefin according to the present invention preferably has a content of the succinic acid diester compound of, in terms of the solid content, 7.0% by mass or more, more preferably 15.0 to 25.0% by mass, preferably 15.0 to 25.0% by mass, and further preferably 20.0 to 23.0% by mass.

The solid catalyst component for polymerization of an olefin composing the catalyst for polymerization of an olefin according to the present invention, when having a content of the succinic acid diester compound of 7.0% by mass or more in terms of the solid content, can easily produce a propylene homopolymer with an excellent melt flow rate and further excellent flexural modulus when used for polymerizing olefins.

The solid catalyst component for polymerization of an olefin composing the catalyst for polymerization of an olefin according to the present invention may comprise, and as described above, other internal electron-donating compounds, together with the succinic acid diester compound as the internal electron-donating compound as the main component, and the total content of the internal electron-donating compounds with the succinic acid diester compound as the main component (S) is preferably 10.0% by mass or more, more preferably 15.0 to 25.0% by mass, and further preferably 20.0 to 24.0% by mass.

In the present application document, the succinic acid diester compound as a main component means that a content percentage of the succinic acid diester compound in the total of internal electron-donating compounds composing the catalyst for polymerization of an olefin is 60.0 to 100.0% by mass.

In the catalyst for polymerization of an olefin according to the present invention, the ratio (S/T), represented by a total content of an internal electron-donating compound with the succinic acid diester compound as a main component (S) to a content of the titanium (T) in the solid catalyst component for polymerization of an olefin, is 0.60 to 1.30, preferably 0.60 to 1.20, and more preferably 0.65 to 1.20 in a molar ratio, in a molar ratio.

The solid catalyst component for polymerization of an olefin composing the catalyst for polymerization of an olefin according to the present invention, when having the ratio (S/T) represented by a content of the succinic acid diester compound (S) to a content of the titanium (T), that is, the ratio represented by a total content of the internal electron-donating compound with the above succinic acid diester compound as the main component/a content of the above titanium in the solid catalyst component for polymerization of an olefin according to the present invention, of 0.60 to 1.30 in a molar ratio, can more effectively produce a propylene homopolymer with an excellent melt flow rate and excellent flexural modulus when used for polymerizing olefins.

Up to now, the succinic acid diester compound, when used as the internal electron-donating compound of a solid catalyst component for polymerization of an olefin, is expensive itself and has been considered as the compound that hardly enhances the tacticity of a polymer of an olefin to be obtained when used for polymerizing olefins. For this reason, the succinic acid diester compound has not been employed as the internal electron-donating compound of a solid catalyst component for polymerization of an olefin, or further an attempt of containing a large amount thereof has never been made. However, according to the studies by the present inventors, it is unexpectedly found that a high content of the succinic acid diester compound, that is, the ratio represented by a total content of the internal electron-donating compound with the succinic acid diester compound as the main component/a content of titanium in the solid catalyst component for polymerization of an olefin is 0.60 to 1.30 in a molar ratio, can produce a propylene homopolymer with higher than ever flexural modulus while ensuring a practically useful melt flow rate when the solid catalyst component for polymerization of an olefin is used for polymerizing olefins, whereby the present invention has come to accomplishment.

The solid catalyst component for polymerization of an olefin composing the catalyst for polymerization of an olefin in the present invention comprises magnesium, titanium, halogen, and a succinic acid diester compound, and as needed, other internal electron-donating compounds, and may further comprise a polysiloxane.

When the solid catalyst component for polymerization of an olefin composing the catalyst for polymerization of an olefin in the present invention comprises a polysiloxane, the tacticity or crystallinity of a polymer to be obtained can be easily enhanced and further the fine powder of a formed polymer can be easily reduced when polymerizing olefins.

A polysiloxane, also known as a silicone oil, is a polymer with a siloxane bond (-Si-O-bond) in the main chain, has a viscosity at 25°C of 0.02 to 100.00 cm²/s (2 to 10000 centistokes), and more preferably 0.03 to 5.00 cm²/s (3 to 500 centistokes), and is in the form of a liquid or viscous chain, partially hydrogenated, cyclic or modified polysiloxane at an ambient temperature.

Examples of the chain polysiloxane include dimethyl polysiloxane and methyl phenyl polysiloxane, examples of the partially hydrogenated polysiloxane include methyl hydrogen polysiloxane having a hydrogenation rate of 10 to 80%, examples of the cyclic polysiloxane include one or more cyclic polysiloxanes selected from hexamethylcyclotrisiloxane, octamethylcyclotetrasiloxane, decamethylcyclopentasiloxane, 2,4,6-trimethylcyclotrisiloxane, and 2,4,6,8-tetramethylcyclotetrasiloxane.

It is preferable that the solid catalyst component for polymerization of an olefin composing the catalyst for polymerization of an olefin according to the present invention be prepared by allowing the above dialkoxy magnesium, titanium halogen compound and succinic acid diester compound to contact in the presence of an inert organic solvent, together with other components as needed.

In the present invention, the above inert organic solvent preferably dissolves the titanium halogen compound and does not dissolve dialkoxy magnesium, and examples specifically include one or more compounds selected from saturated hydrocarbon compounds such as pentane, hexane, heptane, octane, nonane, decane, cyclohexane, methylcyclohexane, ethylcyclohexane, 1,2-diethylcyclohexane, methylcyclohexene, decalin, and a mineral oil, aromatic hydrocarbon compounds such as benzene, toluene, xylene, and ethylbenzene, and halogenated hydrocarbon compounds such as orthodichlorobenzene, methylene chloride, 1,2-dichlorobenzene, carbon tetrachloride, and dichloroethane.

For the above inert organic solvent, preferably used are saturated hydrocarbon compounds or aromatic hydrocarbon compounds which are in the form of a liquid at an ambient temperature with a boiling point of about 50 to 200°C, of which one or more compounds selected from hexane, heptane, octane, ethylcyclohexane, a mineral oil, toluene, xylene, and ethylbenzene, with one or more compounds selected from hexane, heptane, ethylcyclohexane, and toluene being particularly preferable.

Examples of the method for producing a solid catalyst component for polymerization of an olefin composing a catalyst for polymerization of an olefin according to the present invention include a method for obtaining the intended solid catalyst component for polymerization of an olefin (hereinafter referred to as production method a for a solid catalyst component), wherein, when preparing a solid catalyst component for polymerization of an olefin by allowing dialkoxy magnesium, a titanium halogen compound and a succinic acid diester compound to mutually contact,
the titanium halogen compound is allowed to contact the dialkoxy magnesium multiple times, of which when the titanium halogen halogen compound is allowed to contact the dialkoxy magnesium for the first time, 1.5 to 10.0 mol of the titanium halogen compound per mol of the dialkoxy magnesium is used,
a total amount of the titanium compound used per mol of the dialkoxy magnesium is 5.0 to 18.0 mol, and
the succinic acid diester compound is used so that the amount of the succinic acid diester compound used per mol of the dialkoxy magnesium is 0.10 to 0.20 mol.

In the production method a for a solid catalyst component, when the titanium halogen compound is allowed to contact dialkoxy magnesium multiple times, of which when the titanium halogen halogen compound is allowed to contact dialkoxy magnesium for the first time, 1.5 to 10.0 mol of the titanium halogen compound per mol of dialkoxy magnesium is used, 2.0 to 8.0 mol of the titanium halogen compound per mol of dialkoxy magnesium is preferably used, and 2.0 to 5.0 mol of the titanium halogen compound per mol of dialkoxy magnesium is more preferably used.

In the production method a for a solid catalyst component, when the amount of the titanium halogen compound used to dialkoxy magnesium is controlled within the above range, a solid catalyst component for polymerization of an olefin achieving high activity can be prepared with a small amount of the titanium halogen compound.

In the production method a for a solid catalyst component, the total amount of the titanium compound used is 5.0 to 18.0 mol per mol of dialkoxy magnesium, preferably 5.0 to 15.0 mol per mol of dialkoxy magnesium, and more preferably 5.0 to 10.0 mol per mol of dialkoxy magnesium.

In the production method a for a solid catalyst component, when the total amount of the titanium compound used per mol of dialkoxy magnesium is controlled within the above range, a carrier on which the titanium compound and succinic acid diester compound are optimally supported can be prepared while ensuring a sufficiently high activity.

In the production method a for a solid catalyst component, 0.10 to 0.20 mol of the succinic acid diester compound per mol of dialkoxy magnesium is used, 0.10 to 0.18 mol of the succinic acid diester compound per mol of dialkoxy magnesium is preferably used, and 0.10 to 0.15 mol of the succinic acid diester compound per mol of dialkoxy magnesium is more preferably used.

In the production method a for a solid catalyst component, when the amount of the succinic acid diester compound used per mol of dialkoxy magnesium is controlled within the above range, the succinic acid diester compound is sufficiently supported, while inhibiting excess support of the titanium halogen compound on the carrier.

Examples of the production method a for a solid catalyst component include, more specifically, a method in which dialkoxy magnesium, the titanium halogen compound and the succinic acid diester compound are suspended in an inert hydrocarbon solvent and allowed to contact while heating for a predetermined time, and then the titanium halogen compound is further added to the obtained suspension and allowed to contact while heating to obtain a solid product, and the solid product is washed with a hydrocarbon solvent thereby to obtain the intended solid catalyst component for polymerization of an olefin.

The above heating temperature is preferably 70 to 150°C, more preferably 80 to 120°C, and further preferably 90 to 110°C.

The above heating time is preferably 30 to 240 minutes, more preferably 60 to 180 minutes, and further preferably 60 to 120 minutes.

The number of times the titanium halogen compound is added to the above suspension is not particularly limited.

When the titanium halogen compound is added multiple times to the above suspension, heating temperature at each time addition may be adjusted to be within the above range, and heating time during each addition may be adjusted to be within the above range.

In the above preparation method, other internal electron-donating compounds may be used in combination with the succinic acid diester compound. Further, the above contact may also be carried out in the copresence of other reaction reagents such as silicon, phosphorus, and aluminum, and surfactants.

In the solid catalyst component for polymerization of an olefin composing the catalyst for polymerization of an olefin according to the present invention, magnesium, titanium, halogen, and the succinic acid diester compound can be contained in desired amounts respectively as long as the content of the succinic acid diester compound described above and the molar ratio represented by a content (molar amount) of the succinic acid diester compound/a content (molar amount) of titanium described above satisfy the above requirements.

The solid catalyst component for polymerization of an olefin composing the catalyst for polymerization of an olefin according to the present invention comprises titanium, in terms of the atomic weight, in preferably 2.0 to 5.0% by mass, more preferably 2.5 to 4.5% by mass, and further preferably 3.5 to 4.5% by mass.

The solid catalyst component for polymerization of an olefin composing the catalyst for polymerization of an olefin according to the present invention comprises magnesium, in terms of the atomic weight, in preferably 15.0 to 25.0% by mass, more preferably 16.0 to 23.0% by mass, further preferably 17.0 to 22.0% by mass, and much more preferably 17.0 to 21.0% by mass.

The solid catalyst component for polymerization of an olefin composing the catalyst for polymerization of an olefin according to the present invention comprises halogen, in terms of the atomic weight, in preferably 50.0 to 70.0% by mass, more preferably 55.0 to 68.0% by mass, further preferably 58.0 to 67.0% by mass, and much more preferably 60.0 to 66.0% by mass.

In the present application document, the content rate of titanium in the solid catalyst component for polymerization of an olefin means the value measured in conformity with the method (oxidation-reduction titration) described in JIS 8311-1997 "Method for determination of titanium in titanium ores".

Further, in the present application document, the content percentage of magnesium in the solid catalyst component for polymerization of an olefin means the value measured by the EDTA titration method in which the solid catalyst component for polymerization of an olefin is dissolved in a hydrochloric acid solution and titrated with an EDTA solution.

Additionally, in the present application document, the content of halogen in the solid catalyst component for polymerization of an olefin means the value measured by the silver nitrate titration in which the solid catalyst component is treated in a mixed solution of sulfuric acid and pure water to form an aqueous solution, then a predetermined amount of which is separated to titrate halogen with a silver nitrate standard solution.

Further, in the present application document, the content ratio of the succinic acid diester compound, the content ratio of other internal electron-donating compounds added as needed, and the content ratio of the phthalate ester in the solid catalyst component for polymerization of an olefin mean the values obtained by hydrolyzing the solid catalyst component for polymerization of an olefin, then extracting the succinic acid diester compound, other internal electron-donating compounds added as needed, and the phthalate ester using an aromatic solvent, and measuring this solution by the gas chromatography FID (Flame Ionization Detector) method.

The solid catalyst component for polymerization of an olefin composing the catalyst for polymerization of an olefin according to the present invention has the total pore volume of a diameter of 1 µm or less of, when measured by the mercury intrusion method, preferably 0.3 to 1.0 cm³/g, more preferably 0.3 to 0.8 cm³/g, and further preferably 0.3 to 0.6 cm³/g.

The solid catalyst component for polymerization of an olefin composing the catalyst for polymerization of an olefin according to the present invention has the total pore volume of a diameter of 1 µm or less measured by the mercury intrusion method of within the above range. For this reason, the solid catalyst component, when used for block copolymerizing olefins, can sufficiently retain rubber components causing stickiness in particles and produce a block copolymer with excellent flowability (less stickiness).

In the present application document, the total pore volume of a diameter of 1 µm or less measured by the mercury intrusion method means the value measured by the mercury intrusion method using a mercury intrusion porosimeter (a product of Micromeritics, Autopore III9420).

The solid catalyst component for polymerization of an olefin composing the catalyst for polymerization of an olefin according to the present invention has a specific surface area of preferably 200 m²/g or more, preferably 300 to 500 m²/g or more, and more preferably 350 to 500 m²/g or more.

When the solid catalyst component for polymerization of an olefin composing the catalyst for polymerization of an olefin according to the present invention has a specific surface area of 200 m²/g or more, an olefin enters pores formed on the surface of the solid catalyst component and are then subjected to the polymerization reaction in the pores when such a component is used for polymerizing an olefin, particularly copolymerizing olefins. For this reason, a polymer of an olefin can be prepared under high polymerization activity, and the polymerization reaction can be performed easily under high operability while inhibiting the stickiness on the surface of the solid catalyst component associated with the formation of a copolymer.

In the present application document, the specific surface area of the solid catalyst component for polymerization of an olefin means the value automatically measured by the BET method using a specific surface area analyzer (a product of QUANTA CHROME, QUANTA SORBQS-17).

The catalyst for polymerization of an olefin according to the present invention comprises an organoaluminum compound.

In the catalyst for polymerization of an olefin according to the present invention, the organoaluminum compound is preferably one or more compounds selected from the compounds represented by the following formula (III):

R⁸ₚAlQ₃₋ₚ (III)

wherein R⁸ is an alkyl group having 1 to 6 carbon atoms, Q is a hydrogen atom or halogen, and p satisfies 0 < p ≤ 3, wherein when more than one R⁸ are present, each R⁸ may be the same as or different from each other, and when more than one Q are present, each Q may be the same as or different from each other.

In the compound represented by the above formula (III), p satisfies 0 < p ≤ 3 and, specifically, p is 1, 2 or 3.

Specific examples of the organoaluminum compound represented by the above formula (III) include one or more compounds selected from trialkyl aluminum such as triethylaluminum, triisopropyl aluminum, tri-n-butylaluminum, tri-n-hexylaluminum, and triisobutylaluminum, halogenated alkyl aluminum such as diethylaluminum chloride, and diethylaluminum bromide, and diethylaluminum halide, preferably one or more compounds selected from halogenated alkyl aluminum such as diethylaluminum chloride, and trialkyl aluminum such as triethylaluminum, tri-n-butylaluminum, and triisobutylaluminum, and more preferably one or more compounds selected from triethylaluminum and triisobutylaluminum.

The catalyst for polymerization of an olefin of the present invention comprises one or more external electron-donating compounds selected from aminosilane compounds represented by the following formula (I):

R¹ₙSi(NR²R³)₄₋ₙ (I)

wherein R¹ is an alkyl group having 1 to 20 carbon atoms, a vinyl group, an alkenyl group having 3 to 12 carbon atoms, an alkoxy group having 1 to 20 carbon atoms, an vinyloxy group, an alkenyloxy group having 3 to 20 carbon atoms, a cycloalkyl group having 3 to 20 carbon atoms, a cycloalkyloxy group having 3 to 20 carbon atoms, or an aryl group having 6 to 20 carbon atoms or an aryloxy group having 6 to 20 carbon atoms, wherein when more than one R¹ are present, the more than one R¹ may be the same as or different from each other; R² and R³ are a hydrogen atom, an alkyl group having 1 to 20 carbon atoms, a vinyl group, an alkenyl group having 3 to 20 carbon atoms, a cycloalkyl group having 3 to 20 carbon atoms, a cycloalkenyl group having 3 to 20 carbon atoms, or an aryl group having 6 to 20 carbon atoms, wherein R² and R³ may be the same as or different from each other and may be bonded to each other to form a ring, and when more than one NR²R³ groups are present, the more than one NR²R³ groups may be the same as or different from each other; and n satisfies 1 ≤ n ≤ 3.

In the compound represented by the above formula (I), R¹ is an alkyl group having 1 to 20 carbon atoms, a vinyl group, an alkenyl group having 3 to 12 carbon atoms, an alkoxy group having 1 to 20 carbon atoms, a vinyloxy group, an alkenyloxy group having 3 to 20 carbon atoms, a cycloalkyl group having 3 to 20 carbon atoms, a cycloalkyloxy group having 3 to 20 carbon atoms, an aryl group having 6 to 20 carbon atoms, or an aryloxy group having 6 to 20 carbon atoms, wherein when more than one R¹ are present, the more than one R¹ may be the same as or different from each other.

R¹ is preferably an alkyl group having 1 to 8 carbon atoms or a cycloalkyl group having 5 to 8 carbon atoms, and more preferably an alkyl group having 1 to 6 carbon atoms or a cycloalkyl group having 5 to 6 carbon atoms.

In the aminosilane compounds represented by the above formula (I), n satisfies 1 ≤ n ≤ 3 and, specifically, n is 1, 2 or 3.

Examples of the aminosilane compounds represented by the above formula (I) include alkyltris(alkylamino)silane, dialkylbis(alkylamino)silane, and trialkyl(alkylamino)silane.

Examples of the aminosilane compound represented by the above formula (I) specifically include one or more compounds selected from bis(ethylamino)methylethylsilane, t-butyl methyl bis(ethylamino)silane, cyclohexyl methyl bis(ethylamino)silane, dicyclohexyl bis(ethylamino)silane, dicyclopentyl bis(ethylamino)silane, and bis(methylamino) (methylcyclopentylamino)methylsilane.

The aminosilane compound represented by the above formula (I) is particularly preferably one or more compounds selected from t-butyl methyl bis(ethylamino)silane, cyclohexyl methyl bis(ethylamino)silane, dicyclohexyl bis(ethylamino)silane, and dicyclopentyl bis(ethylamino)silane.

The aminosilane compounds represented by the above formula (I) may be used in combination of two or more compounds.

The catalyst for polymerization of an olefin according to the present invention comprises the solid catalyst component for polymerization of an olefin and organoaluminum compound described above, and also comprises one or more external electron-donating compounds selected from the aminosilane compounds represented by the above formula (I), a polymer of an olefin with a large complex viscoelastic ratio, excellent moldability, and further excellent flexural modulus can be easily produced.

The catalyst for polymerization of an olefin according to the present invention comprises the solid catalyst component for polymerization of an olefin described above, the organoaluminum compound, and one or more external electron-donating compounds selected from the aminosilane compounds represented by the above formula (I), that is, the contact product thereof.

The catalyst for polymerization of an olefin according to the present invention may be produced by allowing the solid catalyst component for polymerization of an olefin described above, the organoaluminum compound, and one or more external electron-donating compounds selected from the aminosilane compounds represented by the above formula (I) to contact in the absence of an olefin, or may be prepared, as described hereinbelow, by allowing these components to contact in the presence of an olefin (in the polymerization system).

In the catalyst for polymerization of an olefin according to the present invention, the content ratio of each component can be any ratio unless the effects of the present invention are affected, and not particularly limited, but typically, such a catalyst comprises preferably 1 to 2000 mol, more preferably 50 to 1000 mol, of the organoaluminum compound per mol of the titanium atom in the solid catalyst component for polymerization of an olefin described above.

Additionally, the catalyst for polymerization of an olefin according to the present invention comprises preferably 0.002 to 10 mol, more preferably 0.01 to 2 mol, further preferably 0.01 to 0.5 mol, of the external electron-donating compound represented by the above formula (1) per mol of the organoaluminum compound.

The present invention can accordingly provide the catalyst for polymerization of an olefin, capable of easily producing a propylene homopolymer with an excellent melt flow rate and moldability, as well as further excellent flexural modulus, despite containing the solid catalyst component for polymerization of an olefin comprising a compound other than phthalate esters as the internal electron-donating compound.

Next, the method for producing a polymer of an olefin according to the present invention will be described.

The method for producing a polymer of an olefin according to the present invention comprises polymerizing an olefin using the catalyst for polymerization of an olefin according to the present invention.

In the method for producing a polymer of an olefin according to the present invention, the polymerization of olefins may be homopolymerization, or copolymerization.

In the method for producing a polymer of an olefin according to the present invention, examples of olefins to be polymerized include one or more olefins selected from ethylene, propylene, 1-butene, 1-pentane, 4-methyl-1-pentane, and vinylcyclohexane, of which one or more olefins selected from ethylene, propylene, and 1-butene are preferable, with propylene being more preferable.

When the above olefin is propylene, homopolymerization of propylene may be acceptable, but copolymerization with another α-olefin may also be acceptable.

Examples of olefins to be copolymerizable with propylene include one or more olefins selected from ethylene, 1-butene, 1-pentane, 4-methyl-1-pentane, and vinylcyclohexane.

When the catalyst for polymerization of an olefin according to the present invention is prepared in the presence of olefins (in the polymerization system), the ratio of amounts of each component used can be any ratio unless the effects of the present invention are not affected, and not particularly limited, but typically, preferably 1 to 2000 mol, more preferably 50 to 1000 mol, of the organoaluminum compound described above is allowed to contact per mol of the titanium atom in the solid catalyst component for polymerization of an olefin. Additionally, preferably 0.002 to 10.000 mol, more preferably 0.01 to 2 mol, and further preferably 0.010 to 0.500 mol, of the external electron-donating compound selected from the aminosilane compounds represented by the formula (I) described above is allowed to contact per mol of the organoaluminum compound described above.

The contact order of each component composing the above catalyst for polymerization of an olefin can be any order, but it is desirable that the organoaluminum compound is first charged in the polymerization system, subsequently the electron-donating compound selected from the aminosilane compounds represented by the above formula (I) is charged and allowed to contact, and then the solid catalyst component for polymerization of an olefin described above is charged and allowed to contact.

The method for producing a polymer of an olefin according to the present invention can be carried out in the presence or absence of an organic solvent.

Olefin monomers such as propylene can be used in the form forms of a gas and a liquid. The polymerization temperature is preferably 200°C or less, and more preferably 100°C or less, and the polymerization pressure is preferably 10 MPa or less, and more preferably 5 MPa or less. The polymerization of olefins can be either the continuous polymerization method or the batch polymerization method. The polymerization reaction can be carried out in single stage, or can be carried out in two or more stages.

In addition, when polymerizing an olefin using the catalyst for polymerization of an olefin according to the present invention (also called the primary polymerization), the preliminary polymerization is preferably carried out prior to the primary polymerization for even more improving the catalytic activity, tacticity, particle properties and the like of a polymer to be formed, and for the preliminary polymerization, the same olefins or monomers such as styrene as used in the primary polymerization can be used.

When performing the preliminary polymerization, the contact order of each component and monomers (olefins) composing the catalyst for polymerization of an olefin can be any order, but preferably, the organoaluminum compound is first charged in the preliminary polymerization system in which an inert gas atmosphere or an olefin gas atmosphere is set, subsequently the solid catalyst component for polymerization of an olefin described above is charged and allowed to contact, and then an olefin such as propylene singly, or a mixture of one or more olefins such as propylene and another olefin, is allowed to contact.

In the preliminary polymerization, when the electron-donating compound selected from the aminosilane compounds represented by the above formula (I) is further charged in the preliminary polymerization system, it is preferable that the organoaluminum compound be first charged in the preliminary polymerization system in which an inert gas atmosphere or an olefin gas atmosphere is set, subsequently the electron-donating compound selected from the aminosilane compounds represented by the above formula (I) be charged and allowed to contact, the solid catalyst component for polymerization of an olefin described above further be allowed to contact, and then an olefin such as propylene singly, or a mixture of one or more olefins such as propylene and another olefin, be allowed to contact.

In the method for producing a polymer of an olefin according to the present invention, examples of the polymerization method include the slurry polymerization method in which a solvent of an inert hydrocarbon compound such as cyclohexane and heptane is used, the bulk polymerization method in which a solvent such as liquefied propylene is used, and the gas phase polymerization method in which no solvent is substantially used, with the bulk polymerization method or the gas phase polymerization method being preferable.

When the copolymerization of propylene and a monomer of another α-olefin is performed, the representative copolymerization includes the random copolymerization in which the polymerization is carried out in a single stage using propylene and a small amount of ethylene as a comonomer, and the so-called propylene-ethylene block copolymerization in which the homopolymerization of propylene is carried out in the first stage (the first polymerization vessel) and the copolymerization of propylene and another α-olefin such as ethylene is carried out in the second stage (the second polymerization vessel) or in the multistages of more than that (multistage polymerization vessels), with the block copolymerization of propylene and another α-olefin being preferable.

The block copolymer to be obtained by the block copolymerization is the polymer comprising a segment in which 2 or more monomer compositions continuously change, and refers to those in the form wherein 2 or more polymer chains (segments) with different polymer primary structures in a molecular chain are connected such as monomer species, comonomer species, comonomer composition, comonomer content, comonomer sequence, tacticity, and the like.

In the method for producing a polymer of an olefin according to the present invention, the block copolymerization reaction of propylene and another α-olefin can be typically carried out, in the presence of the catalyst for polymerization of an olefin according to the present invention, by allowing propylene singly or propylene and a small amount of α-olefin (ethylene or the like) to contact in a former stage, and subsequently allowing propylene and α-olefin (ethylene or the like) to contact in a later stage.

The polymerization reaction of the above former stage may be repeatedly carried out multiple times, or the polymerization reaction of the above later stage may be repeatedly carried out multiple times in the multistage reaction.

The block copolymerization reaction of propylene and another α-olefin is specifically carried out preferably by polymerizing at an adjusted polymerization temperature and time so that a percentage of the polypropylene part (in the final copolymer to be obtained) in the former stage is 20 to 90% by mass, and polymerizing by introducing propylene and ethylene or another α-olefin so that the rubber part percentage such as ethylene-propylene rubber (EPR) (in the final copolymer to be obtained) is 10 to 80% by mass in the subsequent later stage.

The polymerization temperature in both former stage and later stage is preferably 200°C or less, more preferably 100°C or less, and further preferably 65 to 80°C, and the polymerization pressure is preferably 10 MPa or less, more preferably 6 MPa or less, and further preferably 5 MPa or less.

The above copolymerization reaction can also employ any of the continuous polymerization method and the batch polymerization method, and the polymerization reaction can be carried out in a single stage, or can be carried out in two or more stages.

Additionally, the polymerization time (residence time in a reactor) is preferably 1 min to 5 hours at respective polymerization stages at the former stage or later stage polymerization, or also at the continuous polymerization.

Examples of the polymerization method include the slurry polymerization method in which a solvent of an inert hydrocarbon compound such as cyclohexane and heptane is used, the bulk polymerization method in which a solvent such as liquefied propylene is used, and the gas phase polymerization method in which no solvent is substantially used, with the bulk polymerization method and the gas phase polymerization method being preferable.

The ethylene-propylene block copolymer contains the EP component (the copolymer component of ethylene and propylene), and the EPR component discharged onto the particle surface of the polymer causes particle stickiness (adhesiveness), thereby resulting in poor flowability. The deterioration of particle flowability in the polymer production facility causes the plant operability to be reduced, whereby it is desired to select a method for producing a polymer that is capable of inhibiting the EPR component from discharging onto the particle surface.

In the present application document, the ethylene-propylene rubber component (EPR) content rate in the ethylene-propylene copolymer means the value calculated by the following method.

### <EPR content rate>

About 2.5 g of the copolymer, 8 mg of 2,6-di-t-butyl-p-cresol, and 250 mL of p-xylene were fed to a 1 L flask equipped with a stirrer and a cooling tube and stirred at a boiling point until the copolymer was completely dissolved. Then, the flask was cooled to room temperature, allowed to stand for 15 hours to allow a solid matter to precipitate, and separated the solid matter from the liquid phase part by a centrifuge. Subsequently, the separated solid matter was put in a beaker, 500 mL of acetone was poured and stirred at room temperature for 15 hours, and the solid matter was filtered and dried, whereby a dry mass was measured (this mass is referred to as (B (g)). Additionally, the same operation was carried out on the separated liquid phase part to allow a solid matter to precipitate and dried to measure a dry mass thereof (this mass is referred to as C (g)), whereby the ethylene-propylene rubber component (EPR) content rate in the copolymer was calculated by the following equation (1). EPR Content rate (% by mass) = [C (g)/{B (g) + C (g)}] × 100 (1)

It is known that when an olefin is copolymerized using a solid catalyst component for polymerization of an olefin comprising an internal electron-donating compound other than phthalate esters, the copolymer to be obtained generally has a poor block rate and EPR content rate as compared with when an olefin is copolymerized using a solid catalyst component for polymerization of an olefin comprising a phthalate ester as an internal electron-donating compound.

In the present invention, in contrast, when propylene as an olefin is copolymerized with a monomer of another α-olefin using the solid catalyst component for polymerization of an olefin comprising a specific solid catalyst component for polymerization of an olefin, the organoaluminum compound, and one or more external electron-donating compounds selected from the aminosilane compounds represented by the above formula (I), a copolymer with an excellent block rate and EPR content rate can be easily produced.

In the method for producing a polymer of an olefin according to the present invention, when the polymer of an olefin to be obtained is a copolymer of propylene and a monomer of another α-olefin, the copolymer has a flexural modulus (FM) of preferably 1300 MPa or more, more preferably 1300 to 2500 MPa, and further preferably 1500 to 2000 MPa.

When the flexural modulus (FM) of the copolymer of propylene and a monomer of another α-olefin is within the above range, excellent rigidity can be easily demonstrated.

In the present application document, the flexural modulus (FM) of the above copolymer means the value obtained as follows: using NEX30III3EG, a product of NISSEI PLASTIC INDUSTRIAL CO., LTD., a multipurpose test piece type A1 specified by JIS K7139 is injection molded under the conditions at a molding temperature of 200°C and a mold temperature of 40°C; the resulting test piece is cut from the center into a test piece having a thickness of 4.0 mm, a width of 10.0 mm, and a length of 80 mm; the cut-out test piece is conditioned in a thermostatic chamber adjusted to 23°C for 72 hours; and then measurement is performed at a measurement atmosphere temperature of 23°C in conformity with JIS K7171 to obtain the value (unit is MPa).

In the method for producing a polymer of an olefin according to the present invention, when the polymer of an olefin to be obtained is a copolymer of propylene and a monomer of another α-olefin, the copolymer has an Izod impact strength of preferably 1.0 to 8.0 kJ/m², more preferably 2.0 to 7.0 kJ/m², and further preferably 2.0 to 6.0 kJ/m².

In the present application, the Izod impact strength of the copolymer of propylene and a monomer of another α-olefin means the value measured by the following method.

### <Method of measuring Izod impact strength>

To the copolymer, 0.10% by weight of IRGANOX 1010 (a product of BASF SE), 0.10% by weight of IRGAFOS 168 (a product of BASF SE), and 0.08% by weight of calcium stearate are blended, and the mixture was kneaded and granulated with a twin-screw extruder to obtain pellets of the copolymer.

Subsequently, the pellets of the copolymer are introduced into an injection molding machine maintained at a mold temperature of 40°C and a cylinder temperature of 200°C and injection-molded to prepare a multipurpose test piece type A1 specified by JIS K7139.

The molded multipurpose test piece is conditioned for 72 hours in a thermostatic chamber adjusted to 23°C and then molded into the following shape using an automatic notching machine (a product of YASUDA SEIKI SEISAKUSHO, LTD.). The Izod impact strength of the notched test piece was measured at 23°C and -30°C according to JIS K7110 using an IZOD testing machine (No. 258-L IMPACT TESTER (WITH REFRIGERATING MACHINE), a product of YASUDA SEIKI SEISAKUSHO, LTD.).
Shape of test piece: ISO 180/1A, thickness: 4.0 mm, width: 8.0 mm, length: 80.0 mm
Shape of notch: type-A notch (radius: 0.25 mm)
Temperature condition: 23°C and 30°C
Impact speed: 3.5 m/s
Nominal pendulum energy: 5.5, 2.75, or 1.0 J measured at 23°C and 1.0 or 0.5 J measured at -30°C.

It is known that when an olefin is copolymerized using a solid catalyst component for polymerization of an olefin comprising an internal electron-donating compound other than phthalate esters, the copolymer to be obtained generally has poor Izod impact strength as compared with when an olefin is copolymerized using a solid catalyst component for polymerization of an olefin comprising a phthalate ester as an internal electron-donating compound.

In the present invention, in contrast, when propylene as an olefin is copolymerized with a monomer of another α-olefin using the solid catalyst component for polymerization of an olefin comprising a specific solid catalyst component for polymerization of an olefin, the organoaluminum compound, and one or more external electron-donating compounds selected from the aminosilane compounds represented by the above formula (I), a copolymer with excellent Izod impact strength can be easily produced.

The present invention can accordingly provide the method for producing a polymer of an olefin, capable of easily producing a propylene homopolymer with an excellent melt flow rate and moldability, as well as further excellent flexural modulus, because the catalyst for polymerization of an olefin according to the present invention is used.

Next, the propylene homopolymer according to the present invention will be described.

The propylene homopolymer according to the present invention has:
(a) a melt flow rate of 300 g/10 min,
(b) a flexural modulus of 1,900 MPa or more, and
(c) a ratio of a complex viscosity η* at an angular frequency of 0.01 rad/sec to a complex viscosity η* at an angular frequency of 100 rad/sec is 5.5 or more.

In the propylene homopolymer according to the present invention, the melt flow rate (MFR) indicating the melt flow rate of the polymer is 300 g/10 min or less, preferably 1 to 300 g/10 min, and more preferably 10 to 200 g/10 min.

In the propylene homopolymer according to the present invention, when a melt flow rate (MFR) is in the above range, practically sufficient formability can be easily demonstrated.

In the present application document, the melt flow rate (MFR) means the value measured in conformity with ASTM D 1238, JIS K 7210.

The propylene homopolymer according to the present invention has a flexural modulus (FM) of 1900 MPa or more, preferably 1900 to 2500 MPa, and more preferably 2000 to 2400 MPa.

In the propylene homopolymer according to the present invention, when a flexural modulus (FM) is within the above range, excellent rigidity can be easily demonstrated.

In the present application document, the flexural modulus (FM) of the above copolymer means the value obtained as follows: using NEX30III3EG, a product of NISSEI PLASTIC INDUSTRIAL CO., LTD., a multipurpose test piece type A1 specified by JIS K7139 is injection molded under the conditions at a molding temperature of 200°C and a mold temperature of 40°C; the resulting test piece is cut from the center into a test piece having a thickness of 4.0 mm, a width of 10.0 mm, and a length of 80.0 mm; the cut-out test piece is conditioned in a thermostatic chamber adjusted to 23°C for 72 hours; and then measurement is performed at a measurement atmosphere temperature of 23°C in conformity with JIS K7171 to obtain the value (unit is MPa).

When the propylene homopolymer according to the present invention satisfies the requirements of the above flexural modulus, excellent rigidity can be easily demonstrated.

The propylene homopolymer according to the present invention has the ratio of the complex viscosity η* at an angular frequency of 0.01 rad/sec to the complex viscosity η* at an angular frequency of 100 rad/sec (complex viscosity η* at an angular frequency of 0.01 rad/sec/complex viscosity η* at an angular frequency of 100 rad/sec), that is, the complex viscoelastic ratio, of 5.5 or more, preferably 5.5 to 20, and more preferably 5.5 to 15.

In the propylene homopolymer according to the present invention, when the above complex viscoelastic ratio is 5.5 or more, excellent tensile strength can be easily achieved.

In the present application, the complex viscoelastic ratio means the value measured by the following method.

### (Complex viscoelastic ratio of the polymer of an olefin)

The complex viscosity η*, which defines the complex viscoelastic ratio of the polymer of an olefin, is measured using a rheometer (MCR302, a product of Anton Paar GmbH).

A disc-shaped measurement sample having a thickness of 2 mm and a diameter of 25 mm is prepared by compression-molding the polymer of an olefin at 210°C for 5 minutes while preventing bubbles from entering.
The measurement is made using a rheometer (MCR302), a product of Anton Paar GmbH.

The complex viscosity η* is measured using a parallel disk having a diameter of 25 mm placed with a gap of 1 mm, the gap being filled with the measurement sample, until the measurement temperature is 190°C and the frequency range is from 0.01 rad/sec to 100 rad/sec.

The complex viscoelastic ratio is calculated as a ratio represented by the complex viscosity η* at an angular frequency of 0.01 rad/sec under a temperature condition of 190°C to the complex viscosity η* at an angular frequency of 100 rad/sec under a temperature condition of 190°C (complex viscosity η* at an angular frequency of 0.01 rad/sec under a temperature condition of 190°C/complex viscosity η* at an angular frequency of 100 rad/sec under a temperature condition of 190°C).

The propylene homopolymer according to the present invention has a molecular weight distribution represented by Mw/Mn, which is the ratio of a weight average molecular weight Mw to a number average molecular weight Mn, of preferably 7.0 to 15.0, more preferably 7.5 to 12.0, and further preferably 8.0 to 11.0.

Further, the propylene homopolymer according to the present invention has a molecular weight distribution represented by Mz/Mw, which is the ratio of a Z average molecular weight Mz to a weight average molecular weight Mw, of preferably 4.0 to 10.0, more preferably 4.5 to 9.0, and further preferably 5.0 to 8.0.

The propylene homopolymer according to the present invention can easily demonstrate the broad molecular weight distribution as described above.

In the present application document, the molecular weight distribution of the propylene homopolymer means the value calculated based on the mass average molecular weight Mw, the number average molecular weight Mn, and Z average molecular weight Mz, which are determined by the measurement under the following conditions using a gel permeation chromatography (GPC) (a product of Waters Corporation, GPCV2000).
Solvent: o-Dichlorobenzene (ODCB)
Temperature: 140°C (SEC)
Column: Shodex GPC UT-806M
Sample concentration: 1 g/liter-ODCB (50 mg/50 mL-ODCB)
Injection volume: 0.5 mL
Flow rate: 1.0 mL/min

The propylene homopolymer according to the present invention can be easily produced by the method for producing a polymer of an olefin according to the present invention.

The present invention can accordingly provide the propylene homopolymer with an excellent melt flow rate and moldability, as well as further excellent flexural modulus.

### [Examples]

Next, the present invention will be further described specifically in reference to examples, but these are simply examples and do not intend to limit the present invention.

### (Example 1)

### 1. Synthesis of a solid catalyst component

Diethyl 2,3-diisopropylsuccinate, which is a succinic acid diester compound, was employed as the internal electron-donating compound, and a solid catalyst component for polymerization of an olefin was prepared by the following method.
(i) A flask having an internal volume of 500 mL, equipped with a stirrer and purged with a nitrogen gas was charged with 40 g (365 mmol) of titanium tetrachloride and 50.0 mL of toluene to form a mixed solution.
(ii) Subsequently, a suspension formed by mixing 20 g (174.8 mmol) of diethoxy magnesium, 60 mL of toluene, and 3.0 mL (11.2 mmol) of diethyl 2,3-diisopropylsuccinate was added to the above mixed solution maintained at a solution temperature of -6°C to obtain an initial contact product containing solution.
(iii) The temperature of the above initial contact product containing solution was raised, 3.0 mL (11.2 mmol) of diethyl 2,3-diisopropylsuccinate was added at 60°C while raising the temperature, and the temperature was further raised to 100°C to continue the reaction for 90 minutes while maintaining the same temperature. After completing the reaction, the supernatant was removed, the first contact product, which is the reaction product, was washed 4 times with 150 mL of toluene at 90°C, and 100 mL of toluene was added.
(iv) Then, 20 mL (182 mmol) of titanium tetrachloride was added to the above first contact product, the temperature was raised to 100°C to continue the reaction for 15 minutes. After completing the reaction, the operation of removing the supernatant was carried out 3 times, and the final contact product, which is the reaction product, was obtained. Subsequently, the obtained final contact product was washed 6 times with 150 mL of n-heptane at 40°C, and the solid and liquid were separated thereby to obtain the solid catalyst component (the solid catalyst component for polymerization of an olefin).

The solid and liquid of the obtained solid catalyst component were separated, and the titanium content and the content of the succinic acid diester compound in the obtained solid content were measured and found to be 3.20% by mass and 17.4% by mass, respectively. Additionally, the ratio represented by a content of the succinic acid diester compound/a content of titanium was 1.01 in a molar ratio.

Table 1 shows the properties of the obtained solid catalyst components.

The titanium content, content of succinic acid diester compound or the like which is the internal electron-donating compound in the solid catalyst component, and physical properties were measured by the following methods.

### <Titanium content in the solid catalyst component>

The titanium content in the solid catalyst component was measured in conformity with the method of JIS 8311-1997.

### <Internal electron-donating compound content>

The content of the internal electron-donating compound was determined by the measurement under the following conditions using a gas chromatography (a product of SHIMADZU CORPORATION, GC-14B). The number of moles of the internal electron-donating compound was determined from the gas chromatography measurement result using a calibration curve measured at a known concentration in advance.

### (Measurement condition)

- Column: Packed column (φ2.6 × 2.1 m, Silicone SE-30 10%, Chromosorb W AW DMCS 80/100, a product of GL Sciences Inc. )
- Detector: FID (Flame Ionization Detector)
- Carrier gas: Helium, flow rate 40 mL/min
- Measuring temperatures: Vaporization chamber 280°C, column 225°C, detector 280°C

### 2. Formation of a polymerization catalyst and polymerization reaction

An autoclave equipped with a stirrer having an internal volume of 2.0 L and purged with a nitrogen gas was charged with 1.3 mmol of triethylaluminum, 0.26 mmol of bis(ethylamino)dicyclopentylsilane as an aminosilane compound, and 0.0026 mmol, in terms of the titanium atom, of the above solid catalyst component to form a catalyst for polymerization. Subsequently, the autoclave was charged with 6.0 L of a hydrogen gas and 1.4 L of liquefied propylene, the preliminary polymerization was carried out at 20°C for 5 minutes, followed by raising the temperature to carry out the polymerization reaction at 70°C for 1 hour.

During this operation, the same methods as in Example 1 were employed to measure the polymerization activity per g of the solid catalyst component, the melt flow rate (MFR) of the polymer, the percentage of p-xylene soluble content (XS) of the polymer, the flexural modulus (FM) of the polymer, the molecular weight distributions (Mw/Mn and Mz/Mw) of the polymer, and the complex viscoelastic ratio (complex viscosity η* at an angular frequency of 0.01 rad/sec/complex viscosity η* at an angular frequency of 100 rad/sec). The results are shown in Table 2.

<Polymerization activity per g of the solid catalyst component>

The polymerization activity per g of the solid catalyst component was determined by the following equation (2). Polymerization activity (g/g-cat) = mass of polymer (g)/mass of solid catalyst component (g) (2)

### <Melt flow rate (MFR) of the polymer>

The melt flow rate (MFR) (g/10 min) indicating the melt flow rate of the polymer was measured in conformity with ASTM D 1238, JIS K 7210.

### <Percentage of p-xylene soluble content (XS) of the polymer>

A flask equipped with a stirrer was charged with 4.0 g of the polymer (polypropylene) and 200 mL of p-xylene. Subsequently, an external temperature was set to about 150°C, and the stirring was continued for 2 hours while refluxing p-xylene (a boiling point 137 to 138°C) in the flask to dissolve the above polymer. Then, this solution was cooled over a period of 1 hour until the solution temperature reached 23°C, and the insoluble components and soluble components were filtered and separated. The solution of the above soluble components was collected, p-xylene was distilled off by drying under heating and reduced pressure, and a weight of the obtained residue was determined to calculate a relative percentage (% by mass) in the formed polymer (polypropylene), which was defined as the xylene soluble content (XS).

### <Flexural modulus (FM) of the polymer>

The flexural modulus (FM) of the polymer was obtained as follows: using NEX30III3EG, a product of NISSEI PLASTIC INDUSTRIAL CO., LTD., a multipurpose test piece type A1 specified by JIS K7139 was injection molded under the conditions at a molding temperature of 200°C and a mold temperature of 40°C; the resulting test piece was cut from the center into a test piece having a thickness of 4.0 mm, a width of 10.0 mm, and a length of 80.0 mm; the cut-out test piece was conditioned in a thermostatic chamber adjusted to 23°C for 72 hours; and then measurement was performed at a measurement atmosphere temperature of 23°C in conformity with JIS K7171 (unit is MPa).

### <Molecular weight distribution of the polymer>

The molecular weight distribution of the polymer was evaluated by the ratio of a mass average molecular weight Mw to a number average molecular weight Mn, Mw/Mn, and the ratio of a Z average molecular weight Mz to a mass average molecular weight Mw, Mz/Mw, determined by the measurement under the following conditions using gel permeation chromatography (GPC) (a product of Waters Corporation, GPCV2000).
Solvent: o-Dichlorobenzene (ODCB)
Temperature: 140°C (SEC)
Column: Shodex GPC UT-806M
Sample concentration: 1 g/liter-ODCB (50 mg/50 mL-ODCB)
Injection volume: 0.5 mL
Flow rate: 1.0 mL/min

### <Complex viscoelastic ratio (complex viscosity η* at an angular frequency of 0.01 rad/sec/complex viscosity η* at an angular frequency of 100 rad/sec)>

The complex viscosity η* of the polymer of an olefin was measured using a rheometer (MCR302, a product of Anton Paar GmbH).

A disc-shaped measurement sample having a thickness of 2 mm and a diameter of 25 mm was prepared by compression-molding the polymer of an olefin at 190°C for 5 minutes while preventing bubbles from entering.

The measurement was made using a rheometer (MCR302), a product of Anton Paar GmbH.

The complex viscosity η* was measured using a parallel disk having a diameter of 25 mm placed with a gap of 1 mm, the gap being filled with the measurement sample, until the measurement temperature was 190°C and the frequency range was from 0.01 rad/sec to 100 rad/sec.

Besides, the complex viscoelastic ratio was calculated as a ratio represented by the complex viscosity η* at an angular frequency of 0.01 rad/sec under a temperature condition of 190°C to the complex viscosity η* at an angular frequency of 100 rad/sec under a temperature condition of 190°C (complex viscosity η* at an angular frequency of 0.01 rad/sec under a temperature condition of 190°C/complex viscosity η* at an angular frequency of 100 rad/sec under a temperature condition of 190°C) .

### (Example 2)

A polymerization catalyst was formed to carry out the polymerization reaction in the same manner as in Example 1, in the exception that, in "2. Formation of a polymerization catalyst and polymerization reaction" of Example 1, 0.13 mmol of bis(ethylamino)cyclohexylmethylsilane was used as the external electron-donating compound instead of 0.26 mmol of bis(ethylamino)dicyclopentylsilane, and the hydrogen gas was changed to 5.0 L in the formation of the propylene homopolymer.

During this operation, the same methods as in Example 1 were employed to measure the polymerization activity per g of the solid catalyst component and physical properties of the obtained polymer. The results are shown in Table 2.

### (Example 3)

### 1. Synthesis of a solid catalyst component

Diethyl 2,3-diisopropylsuccinate and (2-ethoxyethyl) ethyl carbonate, which is an ether carbonate compound, were employed as the internal electron-donating compounds, and a solid catalyst component for polymerization of an olefin was prepared by the following method.
(i) A flask having an internal volume of 500 mL, equipped with a stirrer and purged with a nitrogen gas was charged with 40 g (365 mmol) of titanium tetrachloride and 50.0 mL of toluene to form a mixed solution.
(ii) Subsequently, a suspension formed by mixing 20 g (174.8 mmol) of diethoxy magnesium and 60 mL of toluene was added to the above mixed solution maintained at a solution temperature of -6°C thereby to obtain an initial contact product containing solution.
(iii) The temperature of the above initial contact product containing solution was raised, 3.2 mL (11.7 mmol) of diethyl 2,3-diisopropylsuccinate was added at 60°C while raising the temperature, 2.5 mL (15.4 mmol) of (2-ethoxyethyl) ethyl carbonate was added at 80°C, and the temperature was further raised to 100°C to continue the reaction for 90 minutes while maintaining the same temperature. After completing the reaction, the supernatant was removed, and the first contact product, which is the reaction product, was washed 4 times with 150 mL of toluene at 90°C.
(iv) Then, 80 mL of toluene and 40 mL (365 mmol) of titanium tetrachloride were added to the above first contact product, the temperature was raised to 100°C to continue the reaction for 15 minutes. After completing the reaction, the operation of removing the supernatant was carried out 4 times, and the final contact product, which is the reaction product, was obtained. Subsequently, the obtained final contact product was washed 6 times with 150 mL of n-heptane at 40°C, the solid and liquid were separated thereby to obtain the solid catalyst component (the solid catalyst component for polymerization of an olefin).

The same methods as in Example 1 were employed to measure the properties of the obtained solid catalyst component. The results are shown in Table 1.

### 2. Formation of a polymerization catalyst and polymerization reaction

A polymerization catalyst was formed to carry out the polymerization reaction in the same manner as in "2. Formation of a polymerization catalyst and polymerization reaction" of Example 1, in the exception that the hydrogen gas during the formation of the propylene homopolymer was changed to 4.5 L using the solid catalyst component obtained in 1. above.

During this operation, the same methods as in Example 1 were employed to measure the polymerization activity per g of the solid catalyst component and physical properties of the obtained polymer. The results are shown in Table 2.

### (Comparative Example 1)

A polymerization catalyst was formed to carry out the polymerization reaction in the same manner as in Example 3, in the exception that, in "2. Formation of a polymerization catalyst and polymerization reaction" of Example 3, 0.13 mmol of dicyclopentyl dimethoxysilane was used as the external electron-donating compound instead of 0.13 mmol of bis(ethylamino)dicyclopentylsilane, and the amount of the hydrogen gas charged during the formation of the propylene homopolymer was changed to 9.0 L.

During this operation, the same methods as in Example 1 were employed to measure the polymerization activity per g of the solid catalyst component and physical properties of the obtained polymer. The results are shown in Table 2.

### (Example 4)

### 1. Synthesis of a solid catalyst component

A solid catalyst component (a solid catalyst component for polymerization of an olefin) was prepared in the same manner as in Example 1, in the exception that, in "1. Synthesis of a solid catalyst component" (ii) and (iii) of Example 1, the amount of diethyl 2,3-diisopropylsuccinate added was changed from 3.0 ml (11.2 mmol) to 3.6 mL (13.3 mmol).

The same methods as in Example 1 were employed to measure the properties of the obtained solid catalyst component. The results are shown in Table 1.

### 2. Formation of a polymerization catalyst and polymerization reaction

A polymerization catalyst was formed to carry out the polymerization reaction in the same manner as in "2. Formation of a polymerization catalyst and polymerization reaction" of Example 1, in the exception that the solid catalyst component obtained in 1. above was used.

During this operation, the same methods as in Example 1 were employed to measure the polymerization activity per g of the solid catalyst component and physical properties of the obtained polymer. The results are shown in Table 2.

### (Comparative Example 2)

### 1. Synthesis of a solid catalyst component

A solid catalyst component (a solid catalyst component for polymerization of an olefin) was prepared in the same manner as in Example 1, in the exception that, in "1. Synthesis of a solid catalyst component" (iii) of Example 1, 3.0 mL (11.2 mmol) of diethyl 2,3-diisopropylsuccinate was not added at 60°C while raising the temperature.

The same methods as in Example 1 were employed to measure the properties of the obtained solid catalyst component. The results are shown in Table 1.

### 2. Formation of a polymerization catalyst and polymerization reaction

A polymerization catalyst was formed to carry out the polymerization reaction in the same manner as in "2. Formation of a polymerization catalyst and polymerization reaction" of Example 1, in the exception that the amount of the hydrogen gas charged during the formation of the propylene homopolymer was changed to 3.0 L using the solid catalyst component obtained in 1. above.

During this operation, the same methods as in Example 1 were employed to measure the polymerization activity per g of the solid catalyst component and physical properties of the obtained polymer. The results are shown in Table 2.

### (Example 5)

### 1. Synthesis of a solid catalyst component

(i) A 300 mL round-bottom flask equipped with a stirrer and purged with a nitrogen gas was charged with 5.7 g (60.0 mmol) of magnesium chloride anhydrous, 30 mL of n-decane, and 28 mL (179.0 mmol) of 2-ethylhexyl alcohol, the reaction was carried out with heating at 130°C for 2 hours to prepare a homogeneous solution, and then 2.4 mL (8.8 mmol) of diethyl diisopropylsuccinate was added to this solution and further stirred at 130°C for 1 hour.
(ii) The thus obtained homogenous solution was cooled to room temperature, and then the whole volume thereof was charged dropwise over a period of 1 hour in 240 mL (2.2 mol) of titanium tetrachloride maintained at -20°C. The temperature of this mixed solution was raised to 110°C over a period of 2 hours, 3.2 mL (11.9 mmol) of diethyl diisopropylsuccinate was added when the temperature reached at 90°C, stirred at 110°C for 2 hours, and after completing the 2-hour reaction, the supernatant was removed.
(iii) Then, 240 mL (2.2 mol) of titanium tetrachloride was added, and the reaction was carried out again with heating at 110°C for 2 hours. The product was washed twice with 100 mL of toluene at 110°C and then washed 4 times with 100 mL of n-heptane at 40°C thereby to obtain the solid catalyst component (the solid catalyst component for polymerization of an olefin).

The same methods as in Example 1 were employed to measure the properties of the obtained solid catalyst component. The results are shown in Table 1.

### 2. Formation of a polymerization catalyst and polymerization reaction

A polymerization catalyst was formed to carry out the polymerization reaction in the same manner as in "2. Formation of a polymerization catalyst and polymerization reaction" of Example 1, in the exception that the amount of the hydrogen gas charged during the formation of the propylene homopolymer was changed to 6.5 L using the solid catalyst component obtained in 1. above.

During this operation, the same methods as in Example 1 were employed to measure the polymerization activity per g of the solid catalyst component and physical properties of the obtained polymer. The results are shown in Table 2.

### (Example 6)

### 1. Synthesis of a solid catalyst component

(i) A flask having an internal volume of 500 mL, equipped with a stirrer and purged with a nitrogen gas was charged with 75.0 mL (684 mmol) of titanium tetrachloride and 15.0 mL of toluene to form a mixed solution.
(ii) Subsequently, a suspension formed by mixing 20 g (174.8 mmol) of diethoxy magnesium, 60 mL of toluene, and 2.7 mL (10.2 mmol) of diethyl 2,3-diisopropylsuccinate was added to the above mixed solution maintained at a solution temperature of -6°C to obtain an initial contact product containing solution.
(iii) The temperature of the above initial contact product containing solution was raised, 2.7 mL (10.2 mmol) of diethyl 2,3-diisopropylsuccinate was added at 60°C while raising the temperature, and the temperature was further raised to 100°C to continue the reaction for 90 minutes while maintaining the same temperature. After completing the reaction, the supernatant was removed, the first contact product, which is the reaction product, was washed 4 times with 150 mL of toluene at 90°C, and 80 mL of toluene was added.
(iv) Then, 40 mL (365 mmol) of titanium tetrachloride was added to the above first contact product, the temperature was raised to 100°C to continue the reaction for 15 minutes. After completing the reaction, the operation of removing the supernatant was carried out 3 times, and the final contact product, which is the reaction product, was obtained. Subsequently, the obtained final contact product was washed 6 times with 150 mL of n-heptane at 40°C, the solid and liquid were separated thereby to obtain the solid catalyst component (the solid catalyst component for polymerization of an olefin).

The solid and liquid of the obtained solid catalyst component were separated, and the titanium content and the content of the succinic acid diester compound in the obtained solid content were measured and found to be 4.63% by mass and 20.5% by mass, respectively. Additionally, the ratio represented by a content of the succinic acid diester compound/a content of titanium was 0.82 in a molar ratio.

The same methods as in Example 1 were employed to measure the properties of the obtained solid catalyst component. The results are shown in Table 1.

### 2. Formation of a polymerization catalyst and polymerization reaction

A polymerization catalyst was formed to carry out the polymerization reaction in the same manner as in "2. Formation of a polymerization catalyst and polymerization reaction" of Example 1 using the solid catalyst component obtained in 1. above.

During this operation, the same methods as in Example 1 were employed to measure the polymerization activity per g of the solid catalyst component and physical properties of the obtained polymer. The results are shown in Table 2.

### (Example 7)

A polymerization catalyst was formed to carry out the polymerization reaction in the same manner as in Example 1, in the exception that, in "2. Formation of a polymerization catalyst and polymerization reaction" of Example 6, 0.13 mmol of bis(ethylamino)dicyclopentylsilane was used as the external electron-donating compound instead of 0.26 mmol of bis(ethylamino)dicyclopentylsilane, and the hydrogen gas was changed from 6.0 L to 4.5 L during the formation of the propylene homopolymer.

During this operation, the same methods as in Example 1 were employed to measure the polymerization activity per g of the solid catalyst component and physical properties of the obtained polymer. The results are shown in Table 2.

### (Reference Example 1)

### 1. Synthesis of a solid catalyst component

A 200 mL round-bottomed flask equipped with a stirrer and purged with a nitrogen gas was charged with 10 g (87.4 mmol) of diethoxy magnesium, 2.5 mL (9.4 mmol) of di-n-butyl phthalate and 50 mL of toluene to form a suspended state. Subsequently, the suspension was added to a homogeneous solution of 30 mL of toluene and 20 mL (0.18 mol) of titanium tetrachloride charged in advance in a 500 mL round-bottomed flask equipped with a stirrer and purged with a nitrogen gas.

Then, the temperature was raised with stirring, 1.2 mL (4.5 mmol) of di-n-butyl phthalate was added at 60°C while raising the temperature, and the temperature was further raised to 110°C to continue the reaction for 2 hours while maintaining the same temperature. After completing the reaction, the supernatant was removed, and the product was washed 4 times with 100 mL of toluene at 105°C.

Subsequently, 40 mL of toluene and 20 mL (0.18 mol) of titanium tetrachloride were added, the temperature was raised to 105°C with stirring to continue the reaction for 2 hours at 105°C, and the product was washed 8 times with 75 mL of n-heptane at 40°C thereby to obtain the solid catalyst component (the solid catalyst component for polymerization of an olefin).

The same methods as in Example 1 were employed to measure the properties of the obtained solid catalyst component. The results are shown in Table 1.

### 2. Formation of a polymerization catalyst and polymerization reaction

A polymerization catalyst was formed to carry out the polymerization in the same method as in "2. Formation of a polymerization catalyst and polymerization reaction" of Example 1, in the exception that the amount of hydrogen gas charged during the formation of the propylene homopolymer was changed to 4.5 L using the solid catalyst component obtained in 1. above.

During this operation, the same methods as in Example 1 were employed to measure the polymerization activity per g of the solid catalyst component and physical properties of the obtained polymer. The results are shown in Table 2.

### (Reference Example 2)

A polymerization catalyst was formed to carry out the polymerization reaction in the same manner as in Reference Example 1, in the exception that, in "2. Formation of a polymerization catalyst and polymerization reaction" of Reference Example 1, instead of using of 0.26 mmol of bis(ethylamino)dicyclopentylsilane, the same mol of cyclohexyl methyldimethoxysilane was used as the external electron-donating compound, and the amount of the hydrogen gas charged was changed to 11 L.

During this operation, the same methods as in Example 1 were employed to measure the polymerization activity per g of the solid catalyst component and physical properties of the obtained polymer. The results are shown in Table 2.

### (Reference Example 3)

A polymerization catalyst was formed to carry out the polymerization reaction in the same manner as in Reference Example 1, in the exception that, in "2. Formation of a polymerization catalyst and polymerization reaction" of Reference Example 1, instead of using of 0.26 mmol of bis(ethylamino)dicyclopentylsilane, the same mol of diisopropyl dimethoxysilane was used as the external electron-donating compound, and the amount of the hydrogen gas charged was changed to 9 L.

During this operation, the same methods as in Example 1 were employed to measure the polymerization activity per g of the solid catalyst component and physical properties of the obtained polymer. The results are shown in Table 2.

**[Table 1]**

| | Solid catalyst component properties | | | | |
|---|---|---|---|---|---|
| | Titanium content (% by mass) | Succinic acid diester compound content (% by mass) | EEECA*¹ Content (% by mass) | Phthalate compound*² content (% by mass) | Total content of internal electron-donating compound (S)/titanium content (T) (mol/mol) |
| Example 1 | 3.2 | 17.4 | 0.0 | 0.0 | 1.01 |
| Example 2 | 3.2 | 17.4 | 0.0 | 0.0 | 1.01 |
| Example 3 | 2.5 | 7.6 | 4.3 | 0.0 | 1.08 |
| Comparative Example 1 | 2.5 | 7.6 | 4.3 | 0.0 | 1.08 |
| Example 4 | 3.5 | 21.6 | 0.0 | 0.0 | 1.14 |
| Comparative Example 2 | 6.2 | 10.6 | 0.0 | 0.0 | 0.31 |
| Example 5 | 3.3 | 20.6 | 0.0 | 0.0 | 1.17 |
| Example 6 | 4.6 | 20.5 | 0.0 | 0.0 | 0.82 |
| Example 7 | 4.6 | 20.5 | 0.0 | 0.0 | 0.82 |
| Reference Example 1 | 1.9 | 0.0 | 0.0 | 10.5 | - |
| Reference Example 2 | 1.9 | 0.0 | 0.0 | 10.5 | - |
| Reference Example 3 | 1.9 | 0.0 | 0.0 | 10.5 | - |

| | | | | | |
|---|---|---|---|---|---|
| *¹: EEECA means (2-ethoxyethyl) ethyl carbonate. *²: Phthalate compound content means the total amount of di-n-butyl phthalate, ethyl butyl phthalate, and diethyl phthalate. | | | | | |

**[Table 2]**

| | Propylene polymer activity (g/g-cat) | Polymer properties | | | | | |
|---|---|---|---|---|---|---|---|
| | | MFR (g/10 min) | Flexural modulus FM (MPa) | XS (% by mass) | Molecular weight distribution | | Complex viscoelastic ratio |
| | | | | | Mw/Mn | Mz/Mw | |
| Example 1 | 38,600 | 95 | 2,250 | 2.1 | 8.7 | 7.0 | 11.1 |
| Example 2 | 37,600 | 65 | 2,220 | 1.9 | 11.8 | 6.0 | 10.9 |
| Example 3 | 50,500 | 120 | 1,930 | 2.8 | 9.7 | 5.4 | 5.6 |
| Comparative Example 1 | 80,100 | 70 | 1,740 | 1.4 | 7.8 | 4.6 | 4.9 |
| Example 4 | 47,600 | 87 | 2,330 | 1.5 | 8.3 | 6.8 | 12.9 |
| Comparative Example 2 | 57,500 | 70 | 1,600 | 3.7 | 8.6 | 3.6 | 5.4 |
| Example 5 | 54,500 | 120 | 1,970 | 3.0 | 8.5 | 6.2 | 11.9 |
| Example 6 | 55,600 | 170 | 2,030 | 1.9 | 8.5 | 5.8 | - |
| Example 7 | 68,200 | 180 | 1,970 | 3.3 | 9.1 | 7.4 | - |
| Reference Example 1 | 41,400 | 90 | 1,730 | 1.2 | 7.6 | 3.5 | 2.9 |
| Reference Example 2 | 36,900 | 86 | 1,720 | 1.5 | 6.9 | 3.3 | 3.1 |
| Reference Example 3 | 79,300 | 90 | 1,720 | 1.1 | 6.4 | 3.3 | 3.5 |

### (Example 8)

### <Preparation of an ethylene-propylene copolymerization catalyst>

An autoclave equipped with a stirrer having an internal volume of 2.0 L and purged with a nitrogen gas was charged with 2.4 mmol of triethylaluminum, 0.24 mmol of bis(ethylamino)dicyclopentylsilane as an aminosilane compound, and 0.003 mmol, in terms of the titanium atom, of the solid catalyst component prepared in Example 1 to prepare an ethylene-propylene copolymerization catalyst.

### <An ethylene-propylene copolymer>

### 1. Homopolymerization reaction (homostage polymerization)

An autoclave equipped with a stirrer containing the above prepared ethylene-propylene copolymerization catalyst was charge with 15 mol (1.2 L) of liquefied propylene and 0.20 MPa (partial pressure) of a hydrogen gas, the preliminary polymerization was carried out at 20°C for 5 minutes, then the temperature was raised, and the propylene homopolymerization reaction (homostage polymerization) of the first stage was carried out at 70°C for 45 minutes. Then, the pressure was returned to normal pressure, subsequently inside the autoclave (in the reactor) was purged with nitrogen, and the autoclave was weighed, whereby the polymerization activity of the homostage (first stage) was calculated by subtracting the tare weight of the autoclave (homoactivity, g/g-cat) based on the following equation.

For evaluation of the polymerization performance and polymer physical property, a part of the formed polymer was separated, and the melt-flow rate (MFR) of the polymer was evaluated by the following method.

### <Homoactivity (polymerization activity per g of solid catalyst component>

The homoactivity (polymerization activity per g of the solid catalyst component was determined by the following equation (3). Polymerization activity (g-pp/g-cat) = mass of polymer (g)/mass of solid catalyst component (g) (3)

### <Melt flow rate (MFR) of the polymer>

The melt flow rate (MFR) (g/10 min) indicating a melt flow rate of the polymer was measured in conformity with ASTM D 1238 and JIS K 7210.

### 2. Ethylene-propylene copolymerization reaction

Subsequently, ethylene/propylene were fed into the above autoclave (into the reactor) so that the respective molar ratio was 0.42/0.58, then the temperature was raised to 70°C, and ethylene/propylene/hydrogen were reacted under the conditions of 1.2 MPa, 70°C for 60 minutes while introducing so that the gas feed volume per minute (L/min) was a ratio of 1.7/2.3/0.086 respectively, thereby to obtain the ethylene-propylene copolymer.

Of the obtained ethylene-propylene copolymer, the following methods were employed to measure the copolymer (ICP) activity (g/g-cat), the melt flow rate (MFR) of the copolymer, the block rate (% by mass), the EPR content rate (% by mass), and the Izod impact strength of the copolymer. The results are shown in Table 3.

### <Copolymer (ICP) activity (g/g-cat)>

The copolymer (ICP) activity when forming the ethylene-propylene block copolymer was calculated by the following equation (4). Copolymer (ICP) activity (g/g - cat) = ((I (g) - G (g))/mass of solid catalyst component contained in catalyst for polymerization of an olefin (g))/reaction time (hour) (4)

I (g) herein is the autoclave mass (g) after completing the copolymerization reaction, and G (g) is the autoclave mass (g) after unreacted monomers were removed after completing the homo PP polymerization.

### <Melt flow rate (MFR) of the copolymer>

The melt flow rate (MFR) (g/10 min) indicating a melt flow rate of the copolymer was measured in conformity with ASTM D 1238 and JIS K 7210.

### <Block rate (% by mass)>

The block rate of the ethylene-propylene copolymer was calculated by the following equation (5). Block rate (% by mass) = {(I (g) - G (g))/(I (g) - F (g))} × 100 (5)

I herein is the autoclave mass (g) after completing the copolymerization reaction, and G is the autoclave mass (g) after unreacted monomers were removed after completing the homo polypropylene polymerization, and F is the autoclave mass (g).

### <EPR content rate>

About 2.5 g of the copolymer, 8 mg of 2,6-di-t-butyl-p-cresol, and 250 mL of p-xylene were fed to a 1 L flask equipped with a stirrer and a cooling tube and stirred at a boiling point until the copolymer was completely dissolved. Then, the flask was cooled to room temperature, allowed to stand for 15 hours to allow a solid matter to precipitate, and separated the solid matter from the liquid phase part by a centrifuge. Subsequently, the separated solid matter was put in a beaker, 500 mL of acetone was poured and stirred at room temperature for 15 hours, and the solid matter was filtered and dried, whereby a dry mass was measured (this mass is referred to as (B (g)). Additionally, the same operation was carried out on the separated liquid phase part to allow a solid matter to precipitate and dried to measure a dry mass thereof (this mass is referred to as C (g)), whereby the ethylene-propylene rubber component (EPR) content rate in the copolymer was calculated by the following equation (1). EPR Content rate (% by mass) = [C (g)/{B (g) + C (g)}] × 100 (1)

### <Flexural modulus (FM) of the copolymer>

In the present application document, the flexural modulus (FM) of the above copolymer means the value obtained as follows: using NEX30III3EG, a product of NISSEI PLASTIC INDUSTRIAL CO., LTD., a multipurpose test piece type A1 specified by JIS K7139 is injection molded under the conditions at a molding temperature of 200°C and a mold temperature of 40°C; the resulting test piece is cut from the center into a test piece having a thickness of 4.0 mm, a width of 10.0 mm, and a length of 80.0 mm; the cut-out test piece is conditioned in a thermostatic chamber adjusted to 23°C for 72 hours; and then measurement is performed at a measurement atmosphere temperature of 23°C in conformity with JIS K7171 to obtain the value (unit is MPa).

### <Izod impact strength of the copolymer>

To the copolymer, 0.10% by weight of IRGANOX 1010 (a product of BASF), 0.10% by weight of IRGAFOS 168 (a product of BASF), and 0.08% by weight of calcium stearate are blended, and the mixture was kneaded and granulated with a twin-screw extruder to obtain pellets of the copolymer.

Subsequently, the pellets of the copolymer are introduced into an injection molding machine maintained at a mold temperature of 40°C and a cylinder temperature of 200°C and injection-molded to prepare a multipurpose test piece type A1 specified by JIS K7139.

The molded multipurpose test piece is conditioned for 72 hours in a thermostatic chamber adjusted to 23°C and then molded into the following shape using an automatic notching machine (a product of YASUDA SEIKI SEISAKUSHO, LTD.). The Izod impact strength of the notched test piece was measured at 23°C and -30°C according to JIS K7110 using an IZOD testing machine (No. 258-L IMPACT TESTER (WITH REFRIGERATING MACHINE), a product of YASUDA SEIKI SEISAKUSHO, LTD.).
Shape of test piece: ISO 180/1A, thickness: 4.0 mm, width: 8.0 mm, length: 80.0 mm
Shape of notch: type-A notch (radius: 0.25 mm)
Temperature condition: 23°C and 30°C
Impact speed: 3.5 m/s
Nominal pendulum energy: 5.5, 2.75, or 1.0 J measured at 23°C and 1.0 or 0.5 J measured at -30°C.

### (Comparative Example 3)

A ethylene-propylene polymerization catalyst was formed to carry out the polymerization reaction in the same manner as in Example 6, in the exception that, in "2. Formation of a polymerization catalyst and polymerization reaction" of Example 6, instead of using of 0.24 mmol of bis(ethylamino)dicyclopentylsilane, the same mol of cyclohexyl methyldimethoxysilane was used as the external electron-donating compound.

During this operation, the same methods as in Example 6 were employed to measure the physical properties of the obtained copolymer.

The results are shown in Table 3.

### (Reference Example 4)

### <Preparation of an ethylene-propylene copolymerization catalyst>

An autoclave equipped with a stirrer having an internal volume of 2.0 L and thoroughly purged with a nitrogen gas was charged with 2.4 mmol of triethylaluminum, 0.24 mmol of cyclohexyl methyldimethoxysilane as a silane compound, and 0.003 mmol, in terms of the titanium atom, of the solid catalyst component obtained in Reference Example 1 to prepare an ethylene-propylene copolymerization catalyst.

### <An ethylene-propylene copolymer>

The copolymerization reaction was carried out in the same manner as in Example 6, in the exception that the above ethylene-propylene copolymer was used.

During this operation, the same methods as in Example 6 were employed to measure the physical properties of the obtained copolymer.

The results are shown in Table 3.

**[Table 3]**

| | Homopolymerization result | | Copolymerization result ICP | | | | | | |
|---|---|---|---|---|---|---|---|---|---|
| | Homopolymerization activity (g/g-cat. ) | MFR (g/10 min) | Copolymerization activity (g/g-cat. ) | MFR (g/10 min) | Block rate (% by mass) | EPR Content (% by mass) | Flexural modulus FM (MPa) | Izod impact strength (kJ/m²) | |
| | | | | | | | | 23°C | -30°C |
| Example 8 | 33,300 | 39 | 6,800 | 13 | 16.8 | 19.0 | 1,770 | 4.2 | 3.2 |
| Comparative Example 3 | 29,300 | 30 | 2,300 | 15 | 7.1 | 11.2 | 1,900 | 3.9 | 2.7 |
| Reference Example 4 | 35,900 | 21 | 8,200 | 8.9 | 18.5 | 16.8 | 1,150 | Not broken | 4.0 |

From Table 1 and Table 2, the catalysts for polymerization of olefins according to the present invention used in Example 1 to Example 7 comprise magnesium, titanium, halogen, and a succinic acid diester compound, wherein a ratio represented by a total content of an internal electron-donating compound with the succinic acid diester compound as a main component to a content of the titanium is 0.60 to 1.30 in a molar ratio, an organoaluminum compound, and one or more external electron-donating compounds selected from specific aminosilane compounds represented by the formula (I), thereby revealing that the catalysts for polymerization of olefins, capable of easily producing a propylene homopolymer with an excellent melt flow rate and moldability, as well as further excellent flexural modulus, despite containing a solid catalyst component for polymerization of an olefin comprising a compound other than phthalate esters as an internal electron-donating compound (even when compared with the case of using the solid catalyst components for polymerization of olefins obtained in Reference Examples 1 to 3 comprising phthalate esters as internal electron-donating compounds).

Further, from Table 3, the catalyst for polymerization of an olefin according to the present invention used in Example 8 comprises the above specific components, thereby revealing that the block rate and EPR of the obtained copolymer are excellent, and the flexural modulus (FM) and Izod impact strength of the copolymer are also excellent, despite containing a solid catalyst component for polymerization of an olefin comprising a compound other than phthalate esters as an internal electron-donating compound.

On the other hand, from Table 1 and Table 2, the catalysts for polymerization of olefins used in Comparative Examples 1 and 2 used compounds other than the specific aminosilane compound as the external electron-donating compounds (Comparative Example 1), and the ratio expressed by the content of the internal electron-donating compound with a succinic acid diester compound as the main component composing the solid catalyst component/the content of titanium was out of the predetermined range (Comparative Example 2), thereby revealing that the flexural modulus FM and the complex viscoelastic ratio of the obtained propylene homopolymer were lower when compared with Examples 1 to 5.

Further, from Table 3, the catalyst for polymerization of an olefins used in Comparative Example 3 used a compound other than the specific aminosilane compound as the external electron-donating compound (Comparative Example 1), thereby revealing that the block rate and EPR of the obtained copolymer are lower, and the Izod impact strength of the copolymer is also lower when compared to Example 6.

### [Industrial Applicability]

The present invention can accordingly provide the catalyst for polymerization of an olefin, capable of easily producing a propylene homopolymer with an excellent melt flow rate and moldability, as well as further excellent flexural modulus, despite containing a solid catalyst component for polymerization of an olefin comprising a compound other than phthalate esters as an internal electron-donating compound, the method for producing a polymer of an olefin, and the propylene homopolymer.

## Claims

1. A catalyst for polymerization of an olefin, comprising:
a solid catalyst component for polymerization of an olefin, comprising magnesium, titanium, halogen, and a succinic acid diester compound, wherein a ratio (S/T), represented by a total content of an internal electron-donating compound with the succinic acid diester compound as a main component (S) to a content of the titanium (T), is 0.60 to 1.30 in a molar ratio,
an organoaluminum compound, and
one or more external electron-donating compounds selected from aminosilane compounds represented by the following formula (I):
R¹ₙSi (NR²R³)₄₋ₙ (I)
wherein R¹ is an alkyl group having 1 to 20 carbon atoms, a vinyl group, an alkenyl group having 3 to 12 carbon atoms, an alkoxy group having 1 to 20 carbon atoms, an vinyloxy group, an alkenyloxy group having 3 to 20 carbon atoms, a cycloalkyl group having 3 to 20 carbon atoms, a cycloalkyloxy group having 3 to 20 carbon atoms, or an aryl group having 6 to 20 carbon atoms or an aryloxy group having 6 to 20 carbon atoms, wherein when more than one R¹ are present, the more than one R¹ may be the same as or different from each other; R² and R³ are a hydrogen atom, an alkyl group having 1 to 20 carbon atoms, a vinyl group, an alkenyl group having 3 to 20 carbon atoms, a cycloalkyl group having 3 to 20 carbon atoms, a cycloalkenyl group having 3 to 20 carbon atoms, or an aryl group having 6 to 20 carbon atoms, wherein R² and R³ may be the same as or different from each other and may be bonded to each other to form a ring, and when more than one NR²R³ groups are present, the more than one NR²R³ groups may be the same as or different from each other; and n satisfies 1 ≤ n ≤ 3.

2. The catalyst for polymerization of an olefin according to claim 1, wherein the total content of the internal electron-donating compound with the succinic acid diester compound as the main component (S) in the solid catalyst component for polymerization of an olefin is 10.0% by mass or more.

3. The catalyst for polymerization of an olefin according to claim 1, wherein the content of the titanium (T) in the solid catalyst component for polymerization of an olefin is 1.0 to 6.0% by mass.

4. The catalyst for polymerization of an olefin according to claim 1, wherein the succinic acid diester compound is one or more compounds selected from compounds represented by the following formula (II): 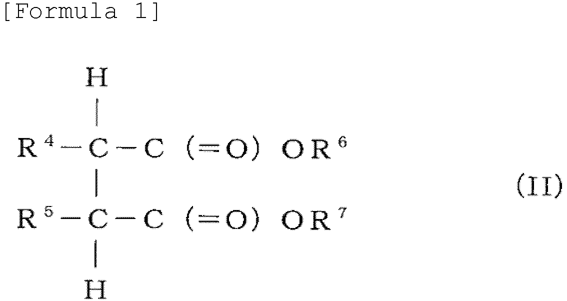 wherein R⁴ and R⁵, the same as or different from each other, are a hydrogen atom or an alkyl group having 1 to 4 carbon atoms, and R⁶ and R⁷, the same as or different from each other, are a straight chain alkyl group or a branched chain alkyl group having 2 to 4 carbon atoms.

5. The catalyst for polymerization of an olefin according to claim 1, wherein the organoaluminum compound is one or more compounds selected from compounds represented by the following formula (III):
R⁸ₚAlQ₃₋ₚ (III)
wherein R⁸ is an alkyl group having 1 to 6 carbon atoms, Q is a hydrogen atom or halogen, and p satisfies 0 < p ≤ 3, wherein when more than one R⁸ are present, each R⁸ may be the same as or different from each other, and when more than one Q are present, each Q may be the same as or different from each other.

6. A method for producing a polymer of an olefin, comprising polymerizing an olefin using the catalyst for polymerization of an olefin according to any one of claims 1 to 5.

7. A propylene homopolymer having:
(a) a melt flow rate of 300 g/10 min or less,
(b) a flexural modulus of 1,900 MPa or more, and
(c) a ratio of a complex viscosity η* at an angular frequency of 0.01 rad/sec to a complex viscosity η* at an angular frequency of 100 rad/sec is 5.5 or more.
